(19) Europäisches Patentamt / European Patent Office / Office européen des brevets

(11) **EP 4 319 291 A1**

(12) **EUROPEAN PATENT APPLICATION**
published in accordance with Art. 153(4) EPC

(43) Date of publication:
**07.02.2024 Bulletin 2024/06**

(21) Application number: **22778976.5**

(22) Date of filing: **30.03.2022**

(51) International Patent Classification (IPC):
*H04W 36/00* (2009.01)    *H04W 4/02* (2018.01)

(52) Cooperative Patent Classification (CPC):
**H04L 5/00; H04W 4/02; H04W 36/00; H04W 64/00**

(86) International application number:
**PCT/CN2022/083902**

(87) International publication number:
**WO 2022/206794 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 CN 202110352095**

(71) Applicant: **Vivo Mobile Communication Co., Ltd.
Dongguan, Guangdong 523863 (CN)**

(72) Inventors:
• **WANG, Yuanyuan
Dongguan, Guangdong 523863 (CN)**
• **SI, Ye
Dongguan, Guangdong 523863 (CN)**
• **WU, Huaming
Dongguan, Guangdong 523863 (CN)**
• **ZHUANG, Zixun
Dongguan, Guangdong 523863 (CN)**

(74) Representative: **Murgitroyd & Company
Murgitroyd House
165-169 Scotland Street
Glasgow G5 8PL (GB)**

(54) **POSITIONING METHOD, TERMINAL AND NETWORK SIDE DEVICE**

(57) This application discloses a positioning method, a terminal, and a network side device. The positioning method includes: switching, by a terminal based on positioning service indication signaling, to a first resource to perform a positioning service, where the positioning service includes PRS measurement or SRS sending, and the positioning service indication signaling includes at least one of first configuration information and first dynamic indication information, where the first dynamic indication information indicates the terminal to switch to the first resource to perform the positioning service, and the first configuration information includes at least one of the following: a dormant BWP; configuration information of the dormant BWP; a configuration relationship between a target measurement gap MG and the positioning service; and an association relationship between the target MG and activation signaling of the positioning service.

A terminal switches, based on positioning service indication signaling, to a first resource to perform a positioning service — 201

FIG. 3

Description

CROSS-REFERENCE TO RELATED APPLICATION

This application claims the priority of Chinese Patent Application No. 202110352095.3 filed in China on March 31, 2021, the entire content of which is hereby incorporated by reference.

TECHNICAL FIELD

This application relates to the field of communication technologies, and specifically, to a positioning method, a terminal, and a network side device.

BACKGROUND

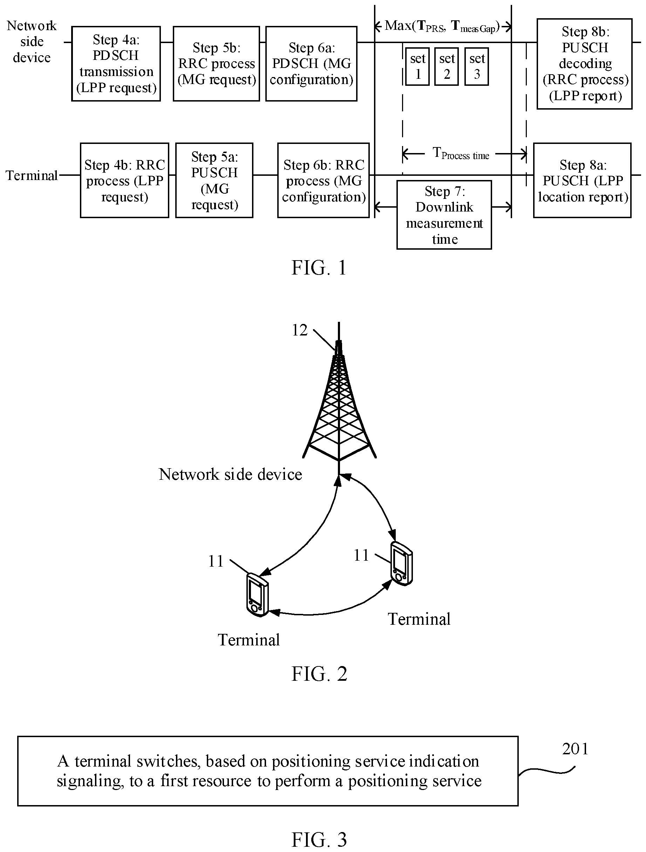

A physical layer latency of a positioning method used in a long term evolution (long term evolution, LTE) system is about 130 milliseconds. Specifically, as shown in FIG. 1, in a process in which a terminal performs a positioning service, a total physical layer latency of the positioning service is about 130 ms. However, in new radio (new radio, NR), a physical layer latency of a positioning service required for a communication system in an industrial Internet of things (industrial Internet of things, IIoT) and business scenario is 10 milliseconds (milliseconds, ms). Therefore, how to reduce a physical layer latency of a positioning service is an urgent problem to be resolved.

SUMMARY

Embodiments of this application provide a positioning method, a terminal, and a network side device, which can resolve a problem of how to reduce a physical layer latency of a positioning service in NR.

According to a first aspect, a positioning method is provided. The method includes: switching, by a terminal based on positioning service indication signaling, to a first resource to perform a positioning service, where the positioning service includes PRS measurement or sounding reference signal (sounding reference signal, SRS) sending, and the positioning service indication signaling includes at least one of first configuration information and first dynamic indication information, where the first dynamic indication information indicates the terminal to switch to the first resource to perform the positioning service, and the first configuration information includes at least one of the following: a dormant (dormant) BWP; configuration information of the dormant BWP; a configuration relationship between a target MG and the positioning service; and an association relationship between the target MG and activation signaling of the positioning service.

According to a second aspect, a positioning apparatus is provided. The positioning apparatus includes a processing module. The processing module is configured to switch, based on positioning service indication signaling, to a first resource to perform a positioning service, where the positioning service includes PRS measurement or SRS sending, and the positioning service indication signaling includes at least one of first configuration information and first dynamic indication information, where the first dynamic indication information indicates a terminal to switch to the first resource to perform the positioning service, and the first configuration information includes at least one of the following: a dormant BWP; configuration information of the dormant BWP; a configuration relationship between a target measurement gap MG and the positioning service; and an association relationship between the target MG and activation signaling of the positioning service.

According to a third aspect, a positioning method is provided. The method includes: receiving, by a network side device, first target information, where the first target information includes at least one of configuration information of a PRS, measurement window information of the PRS, first resource indication information, and first resource switching request information; and sending, by the network side device, positioning service indication signaling to a terminal based on the first target information, where the positioning service indication signaling includes at least one of first configuration information and first dynamic indication information, where the first dynamic indication information indicates the terminal to switch to a first resource to perform a positioning service, the positioning service includes PRS measurement or SRS sending, and the first configuration information includes at least one of the following: a dormant BWP; configuration information of the dormant BWP; a configuration relationship between a target MG and the positioning service; and an association relationship between the target MG and activation signaling of the positioning service.

According to a fourth aspect, a positioning apparatus is provided. The positioning apparatus includes a receiving unit and a sending unit. The receiving unit is configured to receive first target information, where the first target information includes at least one of configuration information of a PRS, measurement window information of the PRS, first resource indication information, and first resource switching request information; and the sending unit is configured to send positioning service indication signaling to a terminal based on the first target information, where the positioning service indication signaling includes at least one of first configuration information and first dynamic indication information, where the first dynamic indication information indicates the terminal to switch to a first resource to perform a positioning service, the positioning service includes PRS measurement or SRS sending, and the first configuration information includes at least one of the following: a dormant BWP; configuration information of the dormant BWP; a configuration relationship between a target measurement gap MG and the positioning service; and an association relationship between the target MG and activation signaling of the positioning service.

According to a fifth aspect, a terminal is provided. The terminal includes a processor, a memory, and a program or an instruction stored in the memory and executable on the processor, wherein when the program or the instruction is executed by the processor, steps of the method according to the first aspect are implemented.

According to a sixth aspect, a terminal is provided. The terminal includes a processor and a communication interface. The processor is configured to switch, based on positioning service indication signaling, to a first resource to perform a positioning service, where the positioning service includes PRS measurement or SRS sending, and the positioning service indication signaling includes at least one of first configuration information and first dynamic indication information, where the first dynamic indication information indicates a terminal to switch to the first resource to perform the positioning service, and the first configuration information includes at least one of the following: a dormant BWP; configuration information of the dormant BWP; a configuration relationship between a target MG and the positioning service; and an association relationship between the target MG and activation signaling of the positioning service.

According to a seventh aspect, a network side device is provided. The network side device includes a processor, a memory, and a program or an instruction stored in the memory and executable on the processor, wherein when the program or the instruction is executed by the processor, implementing steps of the method according to the third aspect are implemented.

According to an eighth aspect, a network side device is provided. The network side device includes a processor and a communication interface. The communication interface is configured to receive first target information, where the first target information includes at least one of configuration information of a PRS, measurement window information of the PRS, first resource indication information, and first resource switching request information; and send positioning service indication signaling to a terminal based on the first target information, where the positioning service indication signaling includes at least one of first configuration information and first dynamic indication information, where the first dynamic indication information indicates the terminal to switch to a first resource to perform a positioning service, the positioning service includes PRS measurement or SRS sending, and the first configuration information includes at least one of the following: a dormant BWP; configuration information of the dormant BWP; a configuration relationship between a target MG and the positioning service; and an association relationship between the target MG and activation signaling of the positioning service.

According to a ninth aspect, a readable storage medium is provided. The readable storage medium stores a program or an instruction, wherein when the program or the instruction is executed by a processor, steps of the positioning method according to the first aspect are implemented, or steps of the positioning method according to the third aspect are implemented.

According to a tenth aspect, a chip is provided. The chip includes a processor and a communication interface. The communication interface is coupled to the processor, and the processor is configured to run a program or instruction, to implement steps of the positioning method according to the first aspect, or implement steps of the positioning method according to the third aspect.

According to an eleventh aspect, a computer program/program product is provided. The computer program/program product is stored in a storage medium. The computer program/program product is executed by at least one processor to implement steps of the positioning method according to the first aspect, or implement steps of the positioning method according to the third aspect.

In embodiments of this application, a terminal may switch, based on positioning service indication signaling, to a first resource to perform a positioning service, where the positioning service includes PRS measurement or SRS sending, and the positioning service indication signaling includes at least one of first configuration information and first dynamic indication information, where the first dynamic indication information indicates the terminal to switch to the first resource to perform the positioning service, and the first configuration information includes at least one of the following: a dormant BWP; configuration information of the dormant BWP; a configuration relationship between a target measurement gap MG and the positioning service; and an association relationship between the target MG and activation signaling of the positioning service. The first dynamic indication information may indicate the terminal to switch to the first resource to perform the positioning service, and the first configuration information includes at least one of the dormant BWP, the configuration information of the dormant BWP, the configuration relationship between the target MG and the positioning service, and the association relationship between the target MG and the activation signaling of the positioning service. Therefore, the terminal may directly perform the positioning service based on the first dynamic indication information and at least one of the first configuration information, so that a physical layer latency of the positioning service can be reduced.

**BRIEF DESCRIPTION OF THE DRAWINGS**

FIG. 1 is a schematic diagram of a delay of a positioning service process according to an embodiment of this application;
FIG. 2 is a schematic architectural diagram of a wireless communication system according to an embodiment of this application;
FIG. 3 is a schematic flowchart 1 of a positioning method according to an embodiment of this application;
FIG. 4 is a schematic diagram of time of a preparation stage of a positioning service according to an embodiment of this application;
FIG. 5 is a schematic flowchart 2 of a positioning method according to an embodiment of this application;
FIG. 6 is a schematic structural diagram 1 of a positioning apparatus according to an embodiment of this application;
FIG. 7 is a schematic structural diagram 2 of a positioning apparatus according to an embodiment of this application;
FIG. 8 is a schematic structural diagram of a communication device according to an embodiment of this application;
FIG. 9 is a schematic structural diagram of a terminal according to an embodiment of this application; and
FIG. 10 is a schematic structural diagram of a network side device according to an embodiment of this application.

**DETAILED DESCRIPTION**

The following clearly describes the technical solutions in embodiments of this application with reference to the accompanying drawings in embodiments of this application. Apparently, the described embodiments are some embodiments of this application rather than all of the embodiments. All other embodiments obtained by a person of ordinary skill in the art based on embodiments of this application fall within the protection scope of this application.

The specification and claims of this application, and terms "first" and "second" are used to distinguish similar objects, but are unnecessarily used to describe a specific sequence or order. It should be understood that the terms in such a way are interchangeable in proper circumstances, so that embodiments of this application can be implemented in other orders than the order illustrated or described herein. Objects distinguished by "first" and "second" are usually one type, and the quantity of objects is not limited. For example, the first object may be one or more than one. In addition, in the specification and the claims, "and/or" means at least one of the connected objects, and the character "/" generally indicates an "or" relationship between the associated objects.

It should be noted that, the technologies described in embodiments of this application are not limited to a long term evolution (Long Term Evolution, LTE) system or an LTE-advanced (LTE-Advanced, LTE-A) system, and can also be used in other wireless communication systems, such as, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), and single-carrier frequency-division multiple access (Single-carrier Frequency-Division Multiple Access, SC-FDMA). The terms "system" and "network" in embodiments of this application are often used interchangeably, and the described technology can be used not only for the above systems and radio technologies, but also for other systems and radio technologies. The following description describes a new radio (New Radio, NR) system for example objectives, and NR terms are used in most of the description below, although these technologies are also applicable to applications other than NR system applications, such as a $6^{th}$ generation ($6^{th}$ Generation, 6G) communication system.

FIG. 2 is a schematic architectural diagram of a wireless communication system to which embodiments of this application are applicable. The wireless communication system includes a terminal 11 and a network side device 12. The terminal 11 may also be referred to as a terminal device or a user terminal (User Equipment, UE). The terminal 11 may be a terminal side device such as a mobile phone, a tablet computer (Tablet Personal Computer), a laptop computer (Laptop Computer) or referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), a wearable device (Wearable Device) or in-vehicle equipment (VUE), or a pedestrian terminal (PUE). The wearable device includes: a smart watch, a bracelet, a headphone, glasses, or the like. It should be noted that, a specific type of the terminal 11 is not limited in embodiments of this application. The network side device 12 may be a base station or a core network, where the base station may be referred to as a nodeB, an evolved nodeB, an access point, a base transceiver station (Base Transceiver Station, BTS), a radio base station, a radio transceiver, a basic service set (Basic Service Set, BSS), an extended service set (Extended Service Set, ESS), a nodeB, an evolved nodeB (eNB), a home nodeB, a home evolved node B, a WLAN access point, a WiFi node, a transmitting receiving point (Transmitting Receiving Point, TRP), or another appropriate term in the field, as long as the same technical effect is achieved. The base station is not limited to a specific technical term. The core network device may be a location management device, for example, a location management function (LMF, and E-SLMC). It should be noted that, a base station or a core network device in the NR system is used as an example in embodiments of this application, but a specific type of the base station or the core network device is not limited.

It should be noted that, in embodiments of this application, a positioning reference signal PRS may be understood as a reference signal for positioning, which includes but is not limited to a downlink positioning reference signal PRS, a synchronization signal and PBCH block (Synchronization Signal and PBCH block, SSB), a channel state information reference signal (Channel State Information Reference Signal, CSI-RS), a tracking reference signal (Tracking Reference Signal, TRS), and the like.

A positioning method provided in embodiments of this application is described below through some embodiments and application scenarios thereof with reference to the accompanying drawings.

As shown in FIG. 3, an embodiment of this application provides a positioning method. The positioning method may be applied to a terminal, and the method may include the following step 201.

Step 201: A terminal switches, based on positioning service indication signaling, to a first resource to perform a positioning service.

The positioning service may include PRS measurement or SRS sending, and the positioning service indication signaling may include first configuration information and at least one first dynamic indication information. The first dynamic indication information may indicate the terminal to switch to the first resource to perform the positioning service, and the first configuration information includes at least one of the following:

a dormant (dormant) BWP;
configuration information of the dormant BWP;
a configuration relationship between a target MG and the positioning service; and
an association relationship between the target MG and activation signaling of the positioning service.

In this embodiment of this application, the positioning service may also be referred to as a location service, a location demand, location request, location estimation, location measurement, or location reporting.

It should be noted that, in this embodiment of this application, the PRS measurement may include PRS receiving, PRS measurement, and PRS reporting. A PRS may be indicated as a PRS resource (resource) or a PRS resource set (resource set).

Optionally, in this embodiment of this application, the PRS may be understood as a reference signal for positioning, which includes but is not limited to a DL PRS, a synchronization signal and physical broadcast channel block (Synchronization Signal and physical broadcast channel (PBCH) block, SSB), a channel state information reference signal (channel state information reference signal, CSI-RS), a tracking reference signal (Tracking Reference Signal, TRS), and the like.

It may be understood that, when the PRS is the DL PRS, in this embodiment of this application, the DL PRS may also be indicated as a DL PRS resource or a DL PRS resource set.

In this embodiment of this application, frequency domain information of the PRS may include but is not limited to at least one of the following: a positioning frequency layer configuration, starting location information of the PRS, band information of the PRS, numberology (numberology) information of the PRS, a band (band) identifier, a center frequency.

The positioning frequency layer configuration may include but is not limited to at least one of a positioning frequency layer identifier (identifier, ID), a point A, an SCS, a band, and a comb size (comb size).

It should be noted that, a BWP switching command or a BWP activation request may be associated with/may correspond to a positioning frequency layer. For example, assuming that a positioning frequency layer identifier is 1, a BWP requested by the BWP activation request is requested by a positioning frequency layer whose identifier is 1, in other words, the BWP activation request corresponds to/is associated with the positioning frequency layer whose identifier is 1.

Certainly, in actual implementation, one BWP activation request may include a plurality of positioning frequency layer identifiers/configurations, to indicate that a requested BWP is related to a plurality of positioning frequency layers. In other words, the terminal may perform measurement of a plurality of positioning frequency layers in one BWP.

It should be noted that, the positioning frequency layer identifier may be an initially configured positioning frequency layer identifier (such as a positioning frequency layer identifier initially configured by a location server), or may be an identifier that is set to distinguish different positioning frequency layers when the terminal requests BWP switching or BWP activation (for example, if BWP switching or BWP activation is requested for N positioning frequency layers, positioning frequency layer identifiers may be 0, 1, ..., N-1). This may be specifically determined according to actual use requirements, which is not limited in this embodiment of this application.

In this embodiment of this application, the location server may be a core network device, for example, a location management function (location management function, LMF) entity.

In this embodiment of this application, time domain information of the PRS may include but is not limited to at least one of the following: a PRS time domain location, a PRS periodicity, a PRS period offset, a PRS occasion (occasion) configuration, a PRS repetition configuration, and the like.

Optionally, in this embodiment of this application, the first configuration information may include at least one of the following:

first indication information;
second indication information;
first type information;
first enabling information; and
second enabling information.

For example, the following describes the first indication information, the second indication information, the first type information, the first enabling information, and the second enabling information respectively.

In this embodiment of this application, the first indication information may indicate whether a serving cell corresponding to the terminal supports the positioning service, in other words, the first indication information may indicate the terminal to perform one or more of establishing the PRS measurement, releasing the PRS measurement, performing the PRS measurement, or performing the SRS sending in the serving cell. In another implementation, configuration information of a serving cell includes the first indication information, to indicate whether the serving cell supports the positioning service, or indicate the serving cell to perform one or more of establishing the PRS measurement, releasing the PRS measurement, performing the PRS measurement, or performing the SRS sending.

Optionally, in this embodiment of this application, the first indication information may be valid in a first condition, where the first condition may include at least one of the following:

Condition 1: the dormant BWP is activated;
Condition 2: the serving cell is activated; and
Condition 3: the serving cell is configured or added.

It may be understood that, when the first indication information is valid in Condition 1, a network side device is the serving cell corresponding to the terminal, which may include the dormant BWP.

The second indication information may indicate whether the dormant BWP corresponding to the terminal supports the positioning service, in other words, the second indication information may indicate the terminal to perform one or more of establishing the PRS measurement, releasing the PRS measurement, performing the PRS measurement, or performing the SRS sending in the dormant BWP. In another implementation, configuration information of the dormant BWP includes the second indication information, to indicate whether the dormant BWP supports the positioning service, or indicate the dormant BWP to perform one or more of establishing the PRS measurement, releasing the PRS measurement, performing the PRS measurement, or performing the SRS sending.

It should be noted that, in this embodiment of this application, the second indication information may also be valid in the first condition. The serving cell in the first condition is a serving cell to which the dormant BWP belongs.

Optionally, the serving cell in this embodiment of this application may be at least one of a primary cell (primary cell, Pcell), a special cell (special cell, Spcell), a primary secondary cell (primary secondary cell, Pscell), and a secondary cell (secondary cell, Scell) in a master cell group (master cell group, MCG) and a secondary cell group (secondary cell group, SCG). This may be specifically determined according to actual use requirements, which is not limited in this embodiment of this application.

It should be noted that, there may be one or more serving cells corresponding to the terminal.

In this embodiment of this application, the first type information may indicate a type of the dormant BWP corresponding to the terminal, and the type of the dormant BWP is associated with whether the dormant BWP corresponding to the terminal supports the positioning service. In an optional embodiment, there are at least two different types of configuration information of the dormant BWP, where one is the dormant BWP that supports the positioning service. In another optional embodiment, configuration information of the dormant BWP includes the type configuration information. Optionally, there is an option of a first type, and the first type of the dormant BWP is associated with whether the dormant BWP corresponding to the terminal supports the positioning service.

It should be noted that, that "the type of the dormant BWP is associated with whether the dormant BWP corresponding to the terminal supports the positioning service" may be specifically that the type of the dormant BWP is associated with BWP usage (usage). The BWP usage may indicate whether the BWP is a BWP for the positioning service (for example, the PRS measurement). Alternatively, configuration information of the BWP includes a plurality of types of BWP usage, where one is related to the positioning service.

Optionally, in this embodiment of this application, the type of the dormant BWP may be any one of the following:

1. Type (Type)1, where Type1 may indicate a dormant BWP that performs channel state information interference measurement (channel state information interference measurement, CSI-IM) measurement; and

2. Type2, where Type2 may indicate a dormant BWP that is allowed to perform the PRS measurement or the SRS sending.

The type of the dormant BWP may be ENUMERATED {Type 1, type2}.

In this embodiment of this application, the first enabling information may indicate whether the positioning service is enabled in the dormant BWP corresponding to the terminal or the serving cell corresponding to the terminal. Further, in an optional embodiment, when the first enabling information occurs, it indicates that the positioning service is enabled in the dormant BWP corresponding to the terminal or the serving cell corresponding to the terminal. Otherwise, by default, it indicates that the positioning service is not enabled.

The second enabling information may indicate whether the dormant BWP corresponding to the terminal or the serving cell corresponding to the terminal supports a positioning service beyond a band range of a BWP. Similarly, when the second enabling information occurs, it indicates that the positioning service may be enabled beyond the band range of the BWP. Otherwise, by default, it indicates that the positioning service beyond the band range of the BWP is not enabled.

It should be noted that, when the dormant BWP corresponding to the terminal or the serving cell corresponding to the terminal supports the positioning service beyond the band range of the BWP, if the terminal switches to the dormant BWP to perform the positioning service, the terminal can perform the positioning service (for example, PRS measurement of all bands or PRS measurement beyond the band range of the BWP). Therefore, long-term data interruption and positioning delay caused by MG request and configuration can be avoided.

In this embodiment of this application, when there is no MG request and configuration, a physical layer latency may be reduced by 90 ms to about 30 ms, which is specifically shown in Table 1.

Table 1 Physical layer latency of R-16 downlink measurement without MG enhancement (the physical layer latency of R16 DL measurement and without MG enhancement)

| Steps (Steps) | Delay and description of R-16 latency component (Delay and Description of R16 Latency Component) (ms) | BWP switching solution (Delay of the enhancement without MG) (ms) |
|---|---|---|
| Step 4: LPP location request information (LPP Request Location Information) | 13-13.5<br>Processing delays (Processing delays): 19 ms<br>- UE:<br>- $T_{UEProc-RRCDLInfo}$<br>- $T_{UEProc-LPPLocationRe}$<br>- gNB: $T_{gNBProc-NAS/LPP}$<br>- AMF: $T_{AMFProc}$ 3 ms<br>- LMF: $T_{LMFProc}$ 3 ms Signaling delay (Signaling delay):<br>4-20.5 ms<br>- UE-gNB: $T_{UE-gNB}$ 0-0.5 ms<br>- gNB-AMF: $T_{gNB-AMF}$ 3-10 ms<br>- AMF-LMF: $T_{AMF-LMF}$ 1-10 ms | 13-13.5 |
| Step 5: RRC location measurement indication (RRC Location Measurement Indication) | 5-8.5<br>Processing delays (Processing delays): 5-8 ms<br>- UE: $T_{UEProc-RRCLocationMeas}$<br>- gNB: $T_{gNBProc-RRC}$ Signaling delay (Signaling delay): 0-0.5 ms<br>- UE-gNB: $T_{UE-gNB}$ | 0 |

(continued)

| Steps (Steps) | Delay and description of R-16 latency component (Delay and Description of R16 Latency Component) (ms) | BWP switching solution (Delay of the enhancement without MG) (ms) |
|---|---|---|
| Step 6: RRC MG configuration (RRC Measurement Gap configuration) | 13-13.5<br>Processing delays (Processing delays): 13 ms<br>- UE: $T_{UEProc-RRCReconf}$<br>- gNB: $T_{gNBProc-RRC}$<br>Signaling delay (Signaling delay): 0-0.5 ms<br>- UE-gNB: $T_{UE-gNB}$ | 0 |
| Step 7: DL PRS measurement (DL PRS measurement) | $T_{DL-Meas}$: 88.5<br>(CSSF=1, $N_{RxBeam,i}$=1, $N_{sample}$=4, DL PRS Periodicity - 20 ms)<br>$T_{PRS-RSTD,i} = (N_{sample} - 1) * T_{effect,i} + T_{last}$<br>$T_{last}=T_i+L_{PRS,i}$=8 ms+0.5 ms<br>$T_{effect,i}=\left\lceil \dfrac{T_i}{T_{available\_PRS,i}} \right\rceil *$<br>$T_{available_{PRS,i}} = 20\,ms$<br>$T_{align,i}$ = 20 ms PRS/MG alignment time<br>$T_{total,PRS-RSTD,i}$-$T_{PRS-RSTD,i}$ + $T_{align,i}$ | $T_{DL-Meas}$: 8.5 ms~<br>(CSSF=1, $N_{RxBeam,i}$=1, $N_{sample}$=1, DL PRS Periodicity - 20 ms)<br>$T_{PRS-RSTD,i} = (N_{sample} - 1) * T_{effect,i} + T_{last}=T_{last}$<br>$T_{last}=T_i+L_{PRS,i}$=8 ms+0.5 ms<br>$T_{effect,i}=\left\lceil \dfrac{T_i}{T_{available\_PRS,i}} \right\rceil *$<br>$T_{available_{PRS,i}} = 4\,ms$<br>$T_{align,i}$ = 0 - 4 ms PRS/MG alignment time<br>$T_{total,PRS-RSTD,i}$-$T_{PRS-RSTD,i}$ + $T_{align,i}$ |
| Step 8: LPP response location information (LPP Provide Location Information) | 10-13.5<br>Processing delays (Processing delays): 16-19 ms<br>- UE:<br>- $T_{UEProc-RRCULInfo}$<br>- $T_{UEProc-LPPLocationRe}$<br>- gNB: $T_{gNBProc-NAS/LPP}$<br>- AMF: $T_{AMFProc}$ 3 ms<br>- LMF: $T_{LMFProc}$ 3 ms<br>Signaling delay (Signaling delay): 4-20.5 ms<br>- UE-gNB: $T_{UE-gNB}$<br>- gNB-AMF: $T_{gNB-AMF}$ 3-10 ms<br>- AMF-LMF: $T_{AMF-LMF}$ 1-10 ms | 10-13.5 |
| Total physical layer latency (Total physical layer latency) | 129.5-137.5 | 31.5 ms |

It should be noted that, when PRS measurement of an MG is not included (if supporting measure PRS without MG), a latency in step 6 will be reduced to 8.5 ms (the DL PRS measurement time will be reduced to 8.5 ms); and an MG configuraion-related latency will be reduced to 0 ms (the MG config-related latency will be reduced to 0 ms, so that the total physical layer latency will be reduced by 100 ms nearly (the physical layer latency will be reduced by 100 ms nearly).

Optionally, in this embodiment of this application, the first resource may be a target BWP, or may be a target MG. It may be understood that, the first dynamic indication information may indicate the terminal to switch to the target BWP to perform the positioning service, or may indicate the terminal to switch to the target MG to perform the positioning service.

Optionally, in this embodiment of this application, the target BWP may be configured or indicated by the network side device for the terminal, or may be pre-configured in a terminal device, or may be pre-determined (agreed in a protocol). This may be specifically determined according to actual use requirements.

Optionally, in this embodiment of this application, the target BWP may be any one of the following BWPs:

a dormant BWP;
a positioning BWP (which may also be referred to as a positioning dedicated BWP);
a first BWP;
an initial (initial) BWP;
BWP#0; and
a normal BWP.

In this embodiment of this application, the normal BWP may be a BWP for transmission of normal data. If the normal BWP may also meet a positioning measurement requirement, the terminal may also perform positioning measurement on the normal BWP.

In this embodiment of this application, a feature of the target BWP may be configured by the network side device, or may be agreed in a protocol. The features of the target BWP may include but is not limited to at least one of the following.

1) There is a large band (for example, 100 megabytes (megabytes, M), 200 M, or 400 M) for the PRS measurement. For example, when the network side device configures the target BWP for the terminal, a sub-carrier space (sub-carrier space, SCS) value and/or a resource block (resource block, RB) value of the target BWP may be configured largely. The SCS value and the RB value may be indicated through a resource indicator value (resource indicator value, RIV).

2) A measuring range of the PRS is not limited by the band range of the BWP, measuring of a plurality of carriers (carrier) without an MG is allowed, or a frequency domain signal beyond the band range of the BWP is allowed.

3) When the PRS needs to be measured, the target BWP may be configured or used.

4) A configuration of the target BWP includes dedicated identification information, to distinguish from a normal BWP, for example, a positioning BWP usage (usage) identifier, or a dedicated BWP ID (for example, BWP ID>3).

5) There is a periodicity, to adapt to periodic PRS measurement.

6) There is a period offset.

7) There is a configuration of duration (duration), to indicate time domain continuous valid duration of the BWP.

8) Timing duration of a BWP-inactivetimer (BWP-inactivetimer) is short, or there is no configuration of the BWP-inactivetimer.

9) The BWP-inactivetimer indicates that the terminal has no positioning reference signal (PRS) measurement within specific time, or the terminal has no positioning reference signal measurement and data scheduling (namely, a service), to switch to a default BWP or the normal BWP.

Optionally, in this embodiment of this application, a band and an SCS of the positioning BWP may be configured to be consistent with a band and an SCS of a carrier. Refer to the following Table 2. A carrier in a frequency range 1 (Frequency Range 1, FR1) supports three types of SCSs, and supports a band corresponding to a specific quantity of RBs in Table 2 in a specific SCS. In this case, three types of positioning BWPs may be configured, to be consistent with a band and an SCS of the carrier. Correspondingly, refer to Table 3 below. A carrier in a FR2 supports two types of SCSs. In this case, two types of positioning BWPs may be configured, to be consistent with a band and an SCS of the carrier.

Table 2 Configurations of transmission bands of quantities of RBs (NRB) in the FR1

| SCS (KHz) | 5 MHz | 10 MHz | 15 MHz | 20 MHz | 25 MHz | 30 MHz | 40 MHz | 50 MHz | 60 MHz | 70 MHz | 80 MHz | 90 MHz | 100 MHz |
|---|---|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 160 | 216 | 270 | NA | NA | NA | NA | NA |
| 30 | 11 | 24 | 38 | 51 | 65 | 78 | 106 | 133 | 162 | 189 | 217 | 245 | 273 |
| 60 | NA | 11 | 18 | 24 | 31 | 38 | 51 | 65 | 79 | 93 | 107 | 121 | 135 |

Table 3 Configurations of transmission bands of quantities of RBs (NRB) in the FR2

| SCS (KHz) | 50 MHz | 100 MHz | 200 MHz | 400 MHz |
|---|---|---|---|---|
| | $N_{RB}$ | $N_{RB}$ | $N_{RB}$ | $N_{RB}$ |
| 15 | 25 | 52 | 79 | 106 |
| 30 | 11 | 24 | 38 | 51 |

Optionally, in this embodiment of this application, the first dynamic indication information may include a BWP switching command and first information, or the first dynamic indication information may include an MG activation command and the first information.

Optionally, in this embodiment of this application, the MG activation command may include at least one of an MG identifier (such as an MG ID) and an MG group identifier (such as an MG group ID), and an MG pattern (pattern) identifier (such as a set of a gap (gap) periodicity and a length agreed in the protocol) and an MG configuration identifier.

Optionally, in this embodiment of this application, an MG group includes a plurality of MGs with similar features, such as a plurality of simultaneous MGs.

Optionally, in this embodiment of this application, for the MG configuration identifier, a plurality of MG configurations may be pre-configured, where each MG configuration is associated with one ID. When the terminal requests an MG configuration, the terminal may request an ID of the configuration. Each MG configuration includes a group of MG configurations, which include at least one of an MG configuration identifier, an MG length, a periodicity, an offset, a relative offset, and a timing advance.

Optionally, in another embodiment, the MG activation command is N bits, and each bit corresponds to one or more MGs. When a bit value is 1, it indicates that a corresponding MG is activated. It should be noted that, the bit value is an example, and other bit values shall also be within the scope of protection of the present invention.

It should be noted that, an MG may be a pre-configured MG, and may further be a pre-configured MG based on the positioning service, thereby reducing request and configuration time of the MG. When an MG configuration needs to be used, the positioning service can be performed by sending the MG activation command. Beneficial effects of delays are shown in Table 4 below.

Table 4

| Steps (Steps) | Delay and description of R-16 latency component (Delay and Description of R16 Latency Component) (ms) | MG activation solution (Delay of the enhancement with pre-configuration MG or low layer triggering MG) |
|---|---|---|
| Step 4: LPP location request information (LPP Request Location Information) | 13-13.5 | 13-13.5 |
| Step 5: RRC location measurement indication (RRC Location Measurement Indication) | 5-8.5 | 0 |
| Step 6: RRC MG configuration (RRC Measurement Gap configuration) | 13-13.5 | 0 |

(continued)

| Steps (Steps) | Delay and description of R-16 latency component (Delay and Description of R16 Latency Component) (ms) | MG activation solution (Delay of the enhancement with pre-configuration MG or low layer triggering MG) |
|---|---|---|
| Step 7: DL PRS measurement (DL PRS measurement) | $T_{DL\text{-}Meas}$: 88.5 | $T_{DL\text{-}Meas}$: 8.5~13 ms<br><br>8.5-13 ms (CSSF=1, $N_{RxBeam,i}$=1, $N_{sample}$=1, DL PRS/pre-configuration MG Periodicity-4 ms)<br><br>- $T_{PRS\text{-}RSTD,i} = (N_{sample} - 1) * T_{effect,i} + T_{last} = 0 * T_{effect,i} + T_{last}$<br><br>$$T_{effect,i} = \left\lceil \frac{T_i}{T_{available\_PRS,i}} \right\rceil * T_{available_{PRS,i}} = 8ms$$<br><br>- $T_{last} = T_i + L_{PRS,i} = 8\ ms + 0.5\ ms$<br><br>- $T_{total,PRS\text{-}RSTD,i} - T_{PRS\text{-}RSTD,i} + T_{align,i} + T_{PDCCH} = 8.5~13$ ms<br><br>- $T_{align,i}$ *is DL PRS alignment time*: 0~4 ms<br><br>- $T_{PDCCH}$ is a signaling transmission delay for BWP switching: 0-0.5 ms |
| Step 8: LPP response location information (LPP Provide Location Information) | 10-13.5 | 10-13.5 |
| Total physical layer latency (Total physical layer latency) | 129.5-137.5 | 31.5 ms-40 ms |

It should be noted that, when enhancement of PRS measurement of an MG is supported (if supporting measure PRS without MG), for example, a pre-configuration MG or A-MG is supported, a latency in step 6 will be reduced to 8.5 ms (the DL PRS measurement time will be reduced to 8.5 ms); and an MG configuraion-related latency will be reduced to 0 ms (the MG config-related latency will be reduced to 0 ms, so that the total physical layer latency will be reduced by 100 ms nearly (the physical layer latency will be reduced by 100 ms nearly).

Optionally, in this embodiment of this application, the first dynamic indication information may further include second information, and the second information may be configured for assisting the terminal in performing BWP switching, where the second information may include at least one of the following:

first cell identification information, where the first cell identification information may indicate a cell configured for the positioning service;
second cell identification information, where the second cell identification information may indicate an activation state of a cell that includes the dormant BWP, or an activation state of a cell group that includes the dormant BWP; and
BWP identification information, where the BWP identification information may indicate a to-be-activated BWP.

For example, the BWP identification information may include the to-be-activated BWP, or the BWP identification information may include at least one bit (bit), where each bit indicates one BWP, and the to-be-activated BWP may be determined according to a value of each bit.

Optionally, in this embodiment of this application, the first dynamic indication information may further include second information, and the second information may be configured for assisting the terminal in performing MG activation, where the second information may include one or more pieces of first MG configuration information.

Optionally, the first MG configuration information may include at least one of the following:

time domain offset information;
periodicity information;

MG length information; and
priority information.

Optionally, in this embodiment of this application, the first dynamic indication information may further include third information, and the third information may be configured for assisting the terminal in switching to the first resource to perform the positioning service, where the third information may include at least one of the following:

first positioning service indication information, where the first positioning service indication information may indicate to activate the positioning service;
second positioning service indication information, where the second positioning service indication information may indicate to activate a target BWP of a first cell to perform the positioning service;
third positioning service indication information, where the third positioning service indication information may indicate to activate a dormant BWP of a second cell to perform the positioning service; and
fourth positioning service indication information, where the fourth positioning service indication information may indicate to activate the target MG to perform the positioning service.

Optionally, in this embodiment of this application, the first dynamic indication information may further include a second serving cell dormancy indication (serving cell dormancy indication), where each bit corresponds to a serving cell that supports the PRS measurement or the SRS sending.

Optionally, in this embodiment of this application, the first dynamic indication information may further include 1-bit enabling information, to indicate whether the PRS measurement or the SRS sending is enabled in the dormant BWP corresponding to the terminal or the serving cell corresponding to the terminal.

Optionally, in this embodiment of this application, the first information may include at least one of location request information and an uplink resource scheduling command. When the first dynamic indication information further includes the location request information and the uplink resource scheduling command, a physical layer latency may be reduced to below 10 ms, so that a low-latency positioning service requirement is met.

For the case, specific reduced delays may be shown in Table 5 below.

Table 5

| Steps (Steps) | Delay and description of R-16 latency component (Delay and Description of R16 Latency Component) (ms) | Combination solution of the BWP switching, the location request information, and the uplink resource scheduling command (Delay of the enhancement without MG) (ms) |
| --- | --- | --- |
| Step 4: LPP location request information (LPP Request Location Information) | 13-13.5<br>Processing delays (Processing delays): 19 ms<br>- UE:<br>- $T_{UEProc-RRCDLInfo}$<br>- $T_{UEProc-LPPLocationRe}$<br>- gNB: $T_{gNBProc-NAS/LPP}$<br>- AMF: $T_{AMFProc}$ 3 ms<br>- LMF: $T_{LMFProc}$ 3 ms<br>Signaling delay (Signaling delay): 4-20.5 ms<br>- UE-gNB: $T_{UE-gNB}$ 0-0.5 ms<br>- gNB-AMF: $T_{gNB-AMF}$ 3-10 ms<br>- AMF-LMF: $T_{AMF-LMF}$ 1-10 ms | 0-0.5 ms<br><br>Processing delays (Processing delays): 9 ms<br>- gNB: $T_{gNBProc-NRPPa}$<br>- AMF: $T_{AMFProc}$<br>- LMF: $T_{LMFProc}$<br>Signaling delay (Signaling delay): 4-20 ms<br>- gNB-AMF: $T_{gNB-AMF}$<br>- AMF-LMF: $T_{AMF-LMF}$<br>- UE-gNB: $T_{UE-gNB}$ 0-0.5 ms |

(continued)

| Steps (Steps) | Delay and description of R-16 latency component (Delay and Description of R16 Latency Component) (ms) | Combination solution of the BWP switching, the location request information, and the uplink resource scheduling command (Delay of the enhancement without MG) (ms) |
|---|---|---|
| Step 5: RRC location measurement indication (RRC Location Measurement Indication) | 5-8.5<br>Processing delays (Processing delays): 5-8 ms<br>- UE: $T_{UEProc-RRCLocationMeas}$<br>- gNB: $T_{gNBProc-RRC}$ Signaling delay (Signaling delay): 0-0.5 ms<br>- UE-gNB: $T_{UE-gNB}$ | 0 |
| Step 6: RRC MG configuration (RRC Measurement Gap configuration) | 13-13.5<br>Processing delays (Processing delays): 13 ms<br>- UE: $T_{UEProc-RRCReconf}$<br>- gNB: $T_{gNBProc-RRC}$ Signaling delay (Signaling delay): 0-0.5 ms<br>- UE-gNB: $T_{UE-gNB}$ | 0 |
| Step 7: DL PRS measurement (DL PRS measurement) | $T_{DL-Meas}$: 88.5 | $T_{DL-Meas}$: 8.5~13 ms |
| Step 8 : LPP location information reporting (LPP Provide Location Information) | 10-13.5<br>Processing delays (Processing delays): 16-19 ms<br>- UE:<br>- $T_{UEProc-RRCULInfo}$<br>- $T_{UEProc-LPPLocationRe}$<br>- gNB: $T_{gNBProc-NAS/LPP}$<br>- AMF: $T_{AMFProc}$ 3 ms<br>- LMF: $T_{LMFProc}$ 3 ms<br>Signaling delay (Signaling delay): 4-20.5 ms<br>- UE-gNB: $T_{UE-gNB}$<br>- gNB-AMF: $T_{gNB-AMF}$ 3-10 ms<br>- AMF-LMF: $T_{AMF-LMF}$ 1-10 ms | 0-0.5 ms |
| Total physical layer latency (Total physical layer latency) | 129.5-137.5 | About 9.5 |

It should be noted that, if the combination solution of the BWP switching, the location request information, and the uplink resource scheduling command is supported, a latency in step 6 will be reduced to 8.5 ms (the DL PRS measurement time will be reduced to 8.5 ms); and an MG configuraion-related latency will be reduced to 0 ms (the MG config-related latency will be reduced to 0 ms), a delay in step 4 will be reduced to 0-0.5 ms, and a delay in step 8 will be reduced to 0-0.5 ms, so that the total physical layer latency is reduced to below 10 ms.

Optionally, in this embodiment of this application, the location request information may include at least one of the following:

a type of a location request;
whether a location of the terminal is requested;

a report periodicity of response location information;

a report gap of the response location information;

a report quantity of the response location information;

response time of the location request;

measurement time corresponding to the positioning service or scheduled time T corresponding to the positioning service;

response location information that indicates a location method specified for reporting;

a report type of a PRS measurement result; and

a pre-configured identifier of the location request.

It should be noted that, in this embodiment of this application, the type of the location request may indicate a periodic type, an aperiodic type, or an event-triggered type, and the type of the location request may also indicate a measurement result/a location result.

In addition, for the foregoing "whether a location of the terminal is requested", 1-bit location request indication information may indicate whether the network side device requests the location of the terminal.

Optionally, the location method in this embodiment of this application may include at least one of the following:

a downlink time difference of arrival (new radio downlink time difference of arrival, DL-TDOA);

a downlink angle-of-departure (new radio downlink angle-of-departure, DL-AoD); and

multiple-round trip time (multiple-round trip time, Multi-RTT).

Optionally, in this embodiment of this application, the foregoing "a report type of a PRS measurement result" may include at least one of the following: a receive reference signal time difference (reference signal time difference, RSTD);

reference signal received power (reference signal received power, RSRP); and

a transmit-receive time difference (Rx-Tx) in the RTT.

Optionally, in this embodiment of this application, the foregoing "a pre-configured identifier (ID) of the location request" may be indicated by M bits. Assuming that IDs of N location requests are pre-configured and each ID may be associated with one piece of LPP location request information, the terminal may determine an activated location request based on the ID.

Optionally, in this embodiment of this application, the LPP location request information (RequestLocationInformation) may be any one of the following location request information:

1. NR-DL-TDOA-RequestLocationInformation;

2. NR-Multi-RTT-RequestLocationInformation; and

3. NR-DL-AoD-RequestLocationInformation.

Optionally, in this embodiment of this application, the location request information may further include a 1-bit PRS measurement request. If a bit is default or the bit is 0, it indicates that the PRS measurement is inactivated. If the bit is 1, it indicates that the PRS measurement is activated.

Optionally, in this embodiment of this application, the uplink resource scheduling command may include at least one of the following:

uplink resource scheduling information;

location report-dedicated scheduling information;

a pre-configured identifier of a location request;

a type of the location request;

whether a location of the terminal is requested;

a report periodicity of response location information;

a report gap of the response location information;

a report quantity of the response location information;

response time of the location request;

measurement time corresponding to the positioning service or scheduled time T corresponding to the positioning service;

response location information that indicates a location method specified for reporting; and

a configuration of a configured grant (configured grant, CG) or an identifier of the CG, where there is an association relationship between the CG and the PRS measurement or between the CG and a PRS measurement window (which may also be referred to as a measurement time window).

In this embodiment of this application, the uplink resource scheduling information may include at least one of frequency domain resource assignment (frequency domain resource assignment) information, time domain resource assignment (time domain resource assignment), and time domain offset information. This may be specifically determined according to actual use requirements, which is not limited in this embodiment of this application.

Optionally, in this embodiment of this application, the association relationship between the CG and the PRS measurement or between the CG and the PRS measurement window may be any one of the following association relationships:

a) one-to-many, to be specific, one measurement result is reported after a plurality of times of the PRS measurement are performed;

b) one-to-one, to be specific, the PRS measurement is performed once, and one measurement result is reported; and

c) many-to-many, to be specific, a plurality of CGs are configured, each CG corresponds to a different PRS group (where each PRS group includes PRSs of different periodicities), one serving cell may send two sets, and periodicities of different PRSs in different sets may be different, so that different quantities of PRSs may be reported on different CGs.

It may be understood that, in time domain, there may be one CG after the PRS measurement window.

Optionally, in this embodiment of this application, a type of the CG may include at least one of the following:

a configured grant type1 (Configured grant type1): all transmission parameters are semi-statically configured through radio resource control (radio resource control, RRC) signaling, and may include a periodicity, an offset (offset), a resource, activation, and a possible modulation and coding scheme (MCS) for uplink transmission; and after receiving the configuration, the terminal may transmit on a (grant) resource based on an arrival case and a configuration case of a service of the terminal, and does not need to perform dynamic scheduling through DCI; and

a configured grant type2: some transmission parameters, such as the periodicity, are semi-statically configured through the RRC signaling; the terminal cannot directly use after receiving the configuration, but after the network side device activates the configuration through DCI, the terminal may use the grant (grant) resource based on the activation of the DCI; and the network side device may also inactivate the configuration through the DCI, and a terminal user that receives the inactivation of the DCI stops using the grant resource.

Optionally, in this embodiment of this application, configuration information of the PRS measurement window may include at least one of the following:

a triggered offset;
a periodicity;
a length;
a timing advance;
a relative offset of a starting location of the PRS measurement window;
absolute time of the starting location of the PRS measurement window;
a quantity of occasions of the PRS measurement window; and
a gap between the occasions of the PRS measurement window.

For example, the association relationship between the CG and the PRS measurement or between the CG and the PRS measurement window may be shown in Table 6 below.

Table 6

| Configuration 1 of the PRS measurement or the PRS measurement window | Configuration 1 of the CG |
| --- | --- |
| Configuration 2 of the PRS measurement or the PRS measurement window | Configuration 2 of the CG |

For example, the association relationship between the CG and the PRS measurement or between the CG and the PRS measurement window may also be implemented by associating the PRS when configuring the CG, for example, Cond the PRS.

Optionally, in this embodiment of this application, when the first information includes the uplink resource scheduling command, response location information (response location information) sent by the terminal to the network side device may include at least one of the following:

a pre-configured report identifier;
positioning information;
a reason for failure to report the response location information;
a location method corresponding to a report;
whether there is unreported response location information; and
acknowledgement location request information.

It should be noted that, when the response location information includes "whether there is unreported response location information", the network side device may determine, based on the response location information, whether a response configured for the terminal device is enough. If the response location information includes "there is unreported response location information", the network side device may configure an uplink resource for the terminal again, so that the terminal can continuously report other unreported response location information.

Optionally, in this embodiment of this application, the terminal may directly send the response location information to the network side device, or may send the response location information to the network side device through a positioning report. This may be specifically determined according to actual use requirements, which is not limited in this embodiment of this application.

Optionally, in this embodiment of this application, the positioning information may include at least one of the following:

information about an event of sending the response location information;
a measurement result and/or a location estimation;
a current measurement result and/or a current location estimation;
a finally obtained measurement result and/or a finally obtained location estimation;
a differential measurement result and/or a differential location estimation; and
a measurement result in a PRS measurement window and/or a location estimation in the PRS measurement window.

Optionally, in this embodiment of this application, the reason for failure to report the response location information may include at least one of the following:

a) the requested response location information is currently unavailable;
b) the requested response location information is undefined;
c) the requested response location information is not supported; and
d) the positioning reference signal (PRS) measurement fails.

In this embodiment of this application, the foregoing acknowledgement (Acknowledgement, ACK) location request information may be for requesting the network side device to feed back whether the response location information is successfully received.

Optionally, if the terminal does not receive ACK fed back by the network side device within a period of time, the terminal device may report the response location information again. The response location information may include information that the terminal does not successfully receive the ACK fed back by the network side device.

Optionally, in this embodiment of this application, the BWP switching command may indicate to switch to/activate a target BWP. Specifically, the BWP switching command may indicate any one of the following:

activating a serving cell to which a target BWP belongs;
activating the target BWP; and
activating the target BWP, wherein the target BWP is the dormant BWP, a BWP currently activated by the terminal, or a BWP (firstOutsideActiveTimeBWP, namely, firstOutsideActiveTimeBWP-Id or firstWithinActiveTimeBWP-Id or another pre-configuration-indicated BWP) activated for the first time by a serving cell. In an embodiment, through a bit value, it is determined that the dormant BWP, the currently activated BWP, or the BWP activated for the first time by the serving cell is activated. For example, when the bit value is 0, it indicates that the dormant BWP is activated. When the bit value is 1, it indicates that a non-dormant BWP is activated. If the currently activated BWP is the non-dormant BWP, the BWP is kept. Otherwise, if the currently activated BWP is the dormant BWP, the BWP (firstOutsideActiveTimeBWP, namely, firstOutsideActiveTimeBWP-Id or firstWithinActiveTimeBWP-Id or another pre-configuration-indicated BWP) activated for the first time by the serving cell is activated.

In a possible implementation, the BWP switching command may indicate to activate the serving cell of the target BWP through a carrier indicator/indication (carrier indicator/indication); or the BWP switching command may indicate to activate the target BWP through a BWP indicator/indication (indicator/indication).

In another possible implementation, the BWP switching command may indicate, through a first serving cell dormancy indication (serving cell dormancy indication), that the target BWP is activated as the dormant BWP, the BWP currently activated by the terminal, or the BWP (firstOutsideActiveTimeBWP, namely, firstOutsideActiveTimeBWP-Id or firstWithinActiveTimeBWP-Id or another pre-configuration-indicated BWP) activated for the first time.

It should be noted that, in this embodiment of this application, "activation" may include at least one of activation and switching.

Further, the first serving cell dormancy indication (serving cell dormancy indication) is N1 bits. Each bit corresponds to one or more serving cells or serving cell groups, and it is determined that the corresponding one or more serving cells or serving cell groups activate a BWP based on a bit value of each bit. For example, when the bit value is 0, it indicates that a dormant BWP of the one or more serving cells is activated. When the bit value is 1, it indicates that a non-dormant BWP of the one or more serving cells is activated. If the BWP activated by the cell is the non-dormant BWP, the BWP is kept. Otherwise, if the BWP currently activated by the cell is the dormant BWP, the BWP (firstOutsideActiveTimeBWP, namely, firstOutsideActiveTimeBWP-Id or firstWithinActiveTimeBWP-Id or another pre-configuration-indicated BWP) activated for the first time by the corresponding serving cell is activated.

Optionally, in this embodiment of this application, an activation state of the serving cell to which the target BWP belongs is configured as on when the serving cell is configured for the terminal, or is configured as on when the serving cell is added to the terminal; or

the activation state of the serving cell to which the target BWP belongs is configured as on before the terminal performs the positioning service.

Optionally, in this embodiment of this application, a radio network temporary identifier (radio network temporary identifier, RNTI) of the first dynamic indication information is associated with the positioning service, or the RNTI of the first dynamic indication information is associated with a power saving RNTI PS-RNTI (power saving RNTI).

Optionally, in this embodiment of this application, there is a first association relationship between the target MG and activation signaling of a PRS, and the first association relationship may include at least one of the following:

an activation state of the PRS is on (ON), and an activation state of the target MG is on; the activation state of the PRS is off (OFF), and the activation state of the target MG is off;
the activation state of the PRS is on, and the target MG is a first MG; and the activation state of the PRS is off, and the target MG is a second MG.

It should be noted that, the activation signaling of the PRS may be specifically activation signaling of an on-demand (on-demand) PRS.

In a possible implementation, an association relationship between the target MG and the activation signaling of the On demand PRS may include at least one of the following:

an activation state of the On demand PRS is on (ON), and an activation state of the target MG is on; the activation state of the On demand PRS is off (OFF), and the activation state of the target MG is off;
the activation state of the On demand PRS is on, and the target MG is a first MG; and the activation state of the On demand PRS is off, and the target MG is a second MG.

In another possible implementation, an association relationship between the target MG and configuration information of the On demand PRS may include at least one of the following:

the configuration information of the On demand PRS is (ON), and the target MG includes an MG associated with the configuration information of the On demand PRS; and the configuration information of the On demand PRS is (OFF), and the target MG does not include the MG associated with the configuration information of the On demand PRS.

Optionally, in this embodiment of this application, the first MG may include an MG for the PRS measurement and an MG for radio resource management (radio resource management, RRM) measurement, or the first MG may include the MG for the PRS measurement; and the second MG may include the MG for the RRM measurement.

It should be noted that, the MG for the PRS measurement may include a PRS in REL-16 and an on-demand PRS.

Optionally, in this embodiment of this application, a length (length) of the first MG is greater than or equal to a length of the second MG.

Optionally, in this embodiment of this application, there may be a second association relationship between the first dynamic indication information and the PRS measurement or a PRS measurement window, and the second association relationship may include at least one of the following:

that a time domain location at which the first dynamic indication information is received (namely, time at which the first dynamic indication information is received) is earlier than a time domain start point of the PRS measurement (namely, a time start point of the PRS);

that the time domain location at which the first dynamic indication information is received is earlier than a time domain location obtained by subtracting first duration from the time domain start point of the PRS measurement;

that the time domain location at which the first dynamic indication information is received is earlier than a time domain start point of the PRS measurement window;

that the time domain location at which the first dynamic indication information is received is earlier than a time domain location obtained by subtracting the first duration from the time domain start point of the PRS measurement window;

that a frequency domain range of a PRS is within a band range of a target BWP;

that a frequency domain range of an SRS is within the band range of the target BWP; and

in a case that the target BWP is the dormant BWP, PRS measurement or SRS sending beyond a band range of the dormant BWP is allowed.

Optionally, in this embodiment of this application, the first duration may be duration for the terminal to perform the BWP switching, or a sum of the duration for the terminal to perform the BWP switching and duration for cross-carrier scheduling.

It may be understood that, in the positioning method provided in this embodiment of this application, the time domain location at which the terminal receives the first dynamic indication information is moved to before a time domain location of the BWP switching and a time domain location of the cross-carrier scheduling, so that a delay of the terminal at the PRS measurement and the SRS sending, in other words, a positioning delay of the terminal can be reduced.

Optionally, in this embodiment of this application, there may be a third association relationship between the first dynamic indication information and scheduled time T, and the third association relationship includes at least one of the following:

that a time domain location at which the first dynamic indication information is received is earlier than the scheduled time T (which may also be referred to as scheduled location time T); and

that the time domain location at which the first dynamic indication information is received is earlier than a time domain location obtained by subtracting first duration from the scheduled time T.

It should be noted that, in this embodiment of this application, the scheduled time T is related to PRS measurement time (for example, the time domain start point of the PRS measurement/the time domain start point of the PRS measurement window).

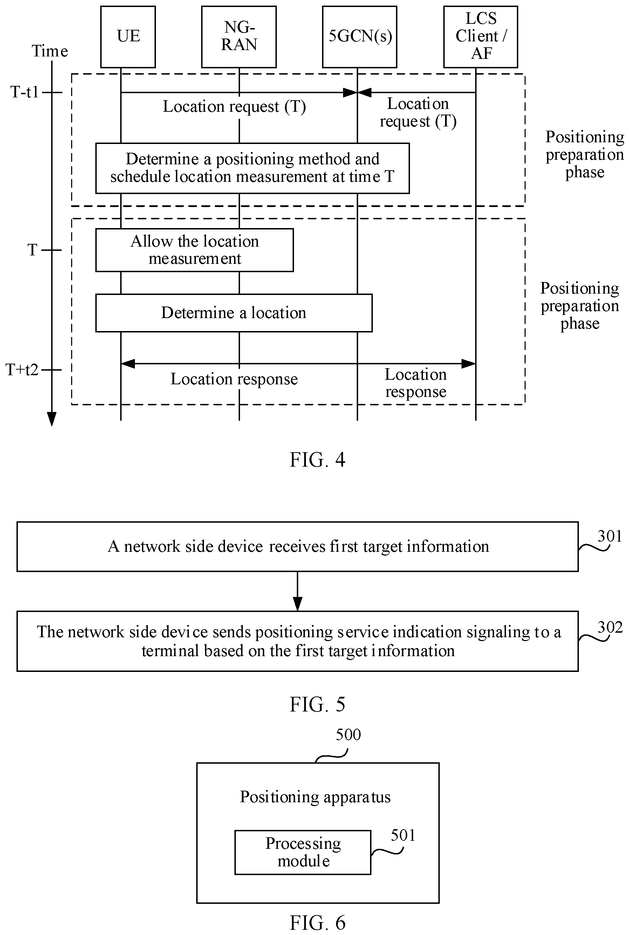

In an example, as shown in FIG. 4, scheduled time (which may also be referred to as scheduled location time) is provided by a requesting location service (location service, LCS) client, an application function (application function, AF) entity, or UE and is transferred to an LMF; and then the LMF performs interaction with a new generation radio access network (new generation radio access network, NG-RAN) and/or the UE, so that location measurement (positioning service) is scheduled at the scheduled time. Then, an obtained location (for example, calculated based on location measurement of the UE or the LMF) is sent to a recipient LCS client, an AF, or target UE based on a type of a location request. Use of the scheduled time allows a latency of the positioning service to be reduced because effective latency only commences at the scheduled time and can exclude time spent prior to the scheduled time for sending the location request and scheduling the location measurement. (The scheduled location time is provided by a requesting LCS Client, AF or the UE and transferred to the LMF, which then interacts with the NG-RAN and/or UE to schedule the location measurements at the scheduled location time. The resulting location (e.g. as calculated based on the location measurements by the UE or LMF) is then provided to a recipient LCS Client, AF or the target UE, depending on the type of location request. Use of a scheduled location time allows a latency to be reduced since effective latency only commences at the scheduled location time and can exclude time spent prior to this for sending the location request and scheduling the location measurements).

Optionally, in this embodiment of this application, there may be a fourth association relationship between the first configuration information and scheduled time T, and the fourth association relationship may include at least one of the following:

that a time domain location at which the first configuration information is received is earlier than the scheduled time T; and

that the time domain location at which the first configuration information is received is earlier than a time domain location obtained by subtracting second duration from the scheduled time T.

Optionally, in this embodiment of this application, the dormant BWP may have at least one of the following features:

stopping a BWP-inactive timer;

starting a PRS measurement timer;

starting a CG associated with the PRS measurement;

starting resource scheduling associated with the PRS measurement;

skipping responding to other response location information than response location information of a first type;

sending an SRS on the dormant BWP;

measuring a PRS on the dormant BWP; and

reporting response location information on a CG associated with the dormant BWP.

In this embodiment of this application, after the starting the PRS measurement timer, if the PRS measurement timer ends, the terminal performs the BWP switching, or stops the PRS measurement or the SRS sending.

Optionally, in this embodiment of this application, the starting the PRS measurement timer may include starting the CG or the resource scheduling associated with the PRS.

Optionally, in this embodiment of this application, the response location information of the first type includes at least one of the following:

response location information transmitted on a physical uplink control channel (physical uplink control channel, PUCCH);

response location information of a first priority;

response location information whose delay requirement is less than a first threshold;

on-demand (on-demand) response location information;

aperiodic response location information; and

event-triggered response location information.

Optionally, in this embodiment of this application, the dormant BWP further may further have at least one of the following features:

the PDCCH for the BWP is not monitored (in other words, not monitor the PDCCH for the BWP);

a downlink shared channel (downlink shared channel, DL-SCH) is not received on the BWP (in other words, not receive a DL-SCH on the BWP);

CSI other than aperiodic CSI is not reported on the BWP (in other words, not report CSI on the BWP report CSI except aperiodic CSI for the BWP);

an uplink shared channel (uplink shared channel, UL-SCH) is not sent on the BWP (in other words, not transmit an UL-SCH on the BWP);

a random access channel (Random Access Channel, RACH) is not sent on the BWP (in other words, not transmit an RACH on the BWP);

a physical uplink control channel (physical uplink control channel, PUCCH) is not sent on the BWP (in other words, not transmit a PUCCH on the BWP);

a downlink configuration and an uplink configured grant type2 that are associated with the serving cell are respectively cleared (in other words, clear any configured downlink assignment and any configured uplink grant Type2 associated with the SCell respectively);

an uplink configured grant type1 of all configurations associated with the serving cell are suspended (in other words, suspend any configured uplink grant Type1 associated with the Scell); and

if configured, beam failure detection and beam failure recovery for the serving cell are performed when a beam failure is detected (in other words, if configured, perform beam failure detection and beam failure recovery for the SCell if beam failure is detected).

Optionally, in this embodiment of this application, step 201 may be specifically implemented through the following step 201a.

Step 201a: The terminal switches, when a BWP indicated by the positioning service indication signaling is a non-dormant BWP, to the target MG to perform the positioning service.

In the positioning method provided in this embodiment of this application, the first dynamic indication information may indicate the terminal to switch to the first resource to perform the positioning service, and the first configuration information includes at least one of the dormant BWP, the configuration information of the dormant BWP, the configuration relationship between the target MG and the positioning service, and the association relationship between the target MG and the activation signaling of the positioning service. Therefore, the terminal may directly perform the positioning service based on the first dynamic indication information and at least one of the first configuration information, so that a physical layer latency of the positioning service can be reduced.

Optionally, in this embodiment of this application, before step 201, the positioning method provided in this embodiment of this application may further include the following step 202.

Step 202: The terminal sends fourth information to the network side device.

The fourth information may be configuration information of a PRS or measurement window information of the PRS.

In this embodiment of this application, after the network side device receives the fourth information, the network side device may send the positioning service indication information to the terminal based on the fourth information.

Optionally, in this embodiment of this application, before step 201, the positioning method provided in this embodiment of this application may further include the following step 203.

Step 203: The terminal sends fifth information to the network side device.

The fifth information may be first resource indication information or first resource switching request information.

In this embodiment of this application, after the network side device receives the fifth information, the network side device may send the positioning service indication information to the terminal based on the fifth information.

Optionally, in this embodiment of this application, before step 201, the positioning method provided in this embodiment of this application may further include the following step 204.

Step 204: The terminal obtains one or more pieces of BWP configuration information.

The one or more pieces of BWP configuration information may include at least one of the following:

BWP configuration information configured by a network side device;
BWP configuration information indicated by the network side device; and
pre-defined BWP configuration information.

Optionally, in this embodiment of this application, the BWP configuration information may include at least one of the following parameters:

a BWP identifier (ID);
a BWP sub-carrier space (SCS);
a BWP cyclic prefix (cyclic prefix, CP) type;
a resource indicator value (resource indicator value, RIV) that may also be referred to as a resource indication value;
BWP usage, where the BWP usage indicates whether the BWP is a BWP for measuring the PRS; and
BWP frequency domain location information.

In this embodiment of this application, the BWP sub-carrier space and the BWP cyclic prefix type may be referred to as a numerology (numerology) of the BWP.

Optionally, in this embodiment of this application, for the BWP usage, an information element (Information Element, IE): enum {pos} may indicate that the BWP is the positioning dedicated BWP or the normal BWP. For example, if {pos} is configured, the BWP is the positioning dedicated BWP, to be specifc, the terminal may perform the PRS measurement or SRS receiving on the BWP. On the contrary, the BWP is the normal BWP.

Optionally, in this embodiment of this application, the BWP frequency domain location information may include at least one of BWP initial frequency domain position and BWP band information. This may be specifically determined according to actual use requirements, which is not limited in this embodiment of this application.

As shown in FIG. 5, an embodiment of this application provides a positioning method. The method may include the following step 301 and step 302.

Step 301: A network side device receives first target information.

The first target information may include at least one of configuration information of a PRS, measurement window information of the PRS, first resource indication information, and first resource switching request information.

Optionally, in this embodiment of this application, the first target information is sent by a terminal to the network side device, or may be sent by a location server to the network side device. Alternatively, one part of the first target information may be sent by the terminal to the network side device, and the other part is sent by the location server to the network side device. This may be specifically determined according to actual use requirements, which is not limited in this embodiment of this application.

Step 302: The network side device sends positioning service indication signaling to the terminal based on the first target information.

The positioning service indication signaling includes at least one of first configuration information and first dynamic indication information, where the first dynamic indication information indicates the terminal to switch to a first resource to perform a positioning service, the positioning service includes positioning reference signal PRS measurement or sounding reference signal SRS sending, and the first configuration information may include at least one of the following:

a dormant BWP;
configuration information of the dormant BWP;
a configuration relationship between a target measurement gap MG and the positioning service; and
an association relationship between the target MG and activation signaling of the positioning service.

Optionally, in this embodiment of this application, the first configuration information may include at least one of the following:

first indication information, where the first indication information may indicate whether a serving cell corresponding to the terminal supports the positioning service;
second indication information, where the second indication information may indicate whether the dormant BWP corresponding to the terminal supports the positioning service;
first type information, where the first type information may indicate a type of the dormant BWP corresponding to the terminal, and the type of the dormant BWP is associated with whether the dormant BWP corresponding to the terminal supports the positioning service;
first enabling information, where the first enabling information may indicate whether the positioning service is enabled in the dormant BWP corresponding to the terminal or the serving cell corresponding to the terminal; and
second enabling information, where the second enabling information may indicate whether the dormant BWP corresponding to the terminal or the serving cell corresponding to the terminal supports a positioning service beyond a band range of a BWP.

Optionally, the first dynamic indication information may include a BWP switching command and first information, or the first dynamic indication information may include an MG activation command and the first information.
Optionally, in this embodiment of this application, the first information may include at least one of location request information and an uplink resource scheduling command.
Optionally, in this embodiment of this application, the first dynamic indication information further includes second information, and the second information is configured for assisting the terminal in performing BWP switching, where the second information may include at least one of the following:

first cell identification information, where the first cell identification information may indicate a cell configured for the positioning service;
second cell identification information, where the second cell identification information may indicate an activation state of a cell that includes the dormant BWP, or an activation state of a cell group that includes the dormant BWP; and
BWP identification information, where the BWP identification information may indicate a to-be-activated BWP.

Optionally, the first dynamic indication information may further include third information, and the third information may be configured for assisting the terminal in switching to the first resource to perform the positioning service, where the third information may include at least one of the following:

first positioning service indication information, where the first positioning service indication information may indicate to activate the positioning service;
second positioning service indication information, where the second positioning service indication information may indicate to activate a target BWP of a first cell to perform the positioning service;
third positioning service indication information, where the third positioning service indication information may indicate to activate a dormant BWP of a second cell to perform the positioning service; and
fourth positioning service indication information, where the fourth positioning service indication information may indicate to activate the target MG to perform the positioning service.

Optionally, the location request information may include at least one of the following:

a type of a location request;
whether a location of the terminal is requested;
a report periodicity of response location information;
a report gap of the response location information;
a report quantity of the response location information;
response time of the location request;

measurement time corresponding to the positioning service or scheduled time T corresponding to the positioning service;

response location information that indicates a location method specified for reporting;

a report type of a PRS measurement result; and

a pre-configured identifier of the location request.

Optionally, the uplink resource scheduling command may include at least one of the following:

uplink resource scheduling information;

location report-dedicated scheduling information;

a pre-configured identifier of a location request;

a type of the location request;

whether a location of the terminal is requested;

a report periodicity of response location information;

a report gap of the response location information;

a report quantity of the response location information;

response time of the location request;

measurement time corresponding to the positioning service or scheduled time T corresponding to the positioning service;

response location information that indicates a location method specified for reporting; and

a configuration of a CG or an identifier of the CG, where there is an association relationship between the CG and the PRS measurement or between the CG and a PRS measurement window.

Optionally, when the first information includes the uplink resource scheduling command, response location information sent by the terminal to the network side device may include at least one of the following:

a pre-configured report identifier;

positioning information;

a reason for failure to report the response location information;

a location method corresponding to a report;

whether there is unreported response location information; and

acknowledgement location request information.

Optionally, the positioning information may include at least one of the following:

information about an event of sending the response location information;

a measurement result and/or a location estimation;

a current measurement result and/or a current location estimation;

a finally obtained measurement result and/or a finally obtained location estimation;

a differential measurement result and/or a differential location estimation; and

a measurement result in a PRS measurement window and/or a location estimation in the PRS measurement window.

Optionally, the BWP switching command may indicate any one of the following:

activating a serving cell to which a target BWP belongs;

activating a target BWP; and

activating a target BWP, and the target BWP may be the dormant BWP, a BWP currently activated by the terminal, or a BWP activated for the first time by a serving cell.

Optionally, an activation state of the serving cell to which the target BWP belongs is configured as on when the serving cell is configured for the terminal, or is configured as on when the serving cell is added to the terminal; or the activation state of the serving cell to which the target BWP belongs is configured as on before the terminal performs the positioning service.

Optionally, an RNTI of the first dynamic indication information is associated with the positioning service, or the RNTI of the first dynamic indication information is associated with a power saving RNTI PS-RNTI.

Optionally, there is a first association relationship between the target MG and activation signaling of a PRS, and the first association relationship may include at least one of the following:

an activation state of the PRS is on, and an activation state of the target MG is on; the activation state of the PRS is off, and the activation state of the target MG is off;

the activation state of the PRS is on, and the target MG is a first MG; and the activation state of the PRS is off, and the target MG is a second MG.

Optionally, the first MG may include an MG for the PRS measurement and an MG for radio resource management RRM measurement, or the first MG may include the MG for the PRS measurement; and

the second MG may include the MG for the RRM measurement.

Optionally, a length of the first MG may be greater than or equal to a length of the second MG.

Optionally, there may be a second association relationship between the first dynamic indication information and the PRS measurement or a PRS measurement window, and the second association relationship may include at least one of the following:

that a time domain location at which the first dynamic indication information is received is earlier than a time domain start point of the PRS measurement;

that the time domain location at which the first dynamic indication information is received is earlier than a time domain location obtained by subtracting first duration from the time domain start point of the PRS measurement;

that the time domain location at which the first dynamic indication information is received is earlier than a time domain start point of the PRS measurement window;

that the time domain location at which the first dynamic indication information is received is earlier than a time domain location obtained by subtracting the first duration from the time domain start point of the PRS measurement window;

that a frequency domain range of a PRS is within a band range of a target BWP;

that a frequency domain range of an SRS is within the band range of the target BWP; and

in a case that the first resource is the dormant BWP, PRS measurement or SRS sending beyond a band range of the dormant BWP is allowed.

Optionally, there is a third association relationship between the first dynamic indication information and scheduled time T, and the third association relationship may include at least one of the following:

that a time domain location at which the first dynamic indication information is received is earlier than the scheduled time T; and

that the time domain location at which the first dynamic indication information is received is earlier than a time domain location obtained by subtracting first duration from the scheduled time T.

Optionally, there is a fourth association relationship between the first configuration information and scheduled location time T, and the fourth association relationship may include at least one of the following:

that a time domain location at which the first configuration information is received is earlier than the scheduled time T; and

that the time domain location at which the first configuration information is received is earlier than a time domain location obtained by subtracting second duration from the scheduled time T.

Optionally, the dormant BWP may have at least one of the following features:

stopping a BWP-inactive timer;

starting a PRS measurement timer;

starting a CG associated with the PRS measurement;

starting resource scheduling associated with the PRS measurement;

skipping responding to other response location information than response location information of a first type;

sending an SRS on the dormant BWP;

measuring a PRS on the dormant BWP; and

reporting response location information on a CG associated with the dormant BWP.

Optionally, the response location information of the first type may include at least one of the following:

response location information transmitted on a PUCCH;

response location information of a first priority;

response location information whose delay requirement is less than a first threshold;

on-demand response location information;
aperiodic response location information; and
event-triggered response location information.

In the positioning method provided in this embodiment of this application, the first dynamic indication information may indicate the terminal to switch to the first resource to perform the positioning service, and the first configuration information includes at least one of the dormant BWP, the configuration information of the dormant BWP, the configuration relationship between the target MG and the positioning service, and the association relationship between the target MG and the activation signaling of the positioning service. Therefore, after the network side device sends the positioning service indication signaling to the terminal, the terminal may directly perform the positioning service based on the first dynamic indication information and at least one of the first configuration information, so that a physical layer latency of the positioning service can be reduced.

It should be noted that, in a positioning method provided in embodiments of this application, an execution entity may be a positioning apparatus, or a control module configured to perform the positioning method in the positioning apparatus. In this embodiment of this application, an example in which positioning apparatus executes the positioning method is used to describe the positioning apparatus provided in embodiments of this application.

As shown in FIG. 6, an embodiment of this application provides a positioning apparatus 500. The positioning apparatus 500 includes a processing module 501. The processing module 501 is configured to switch, based on positioning service indication signaling, to a first resource to perform a positioning service, where the positioning service includes PRS measurement or SRS sending, and the positioning service indication signaling includes at least one of first configuration information and first dynamic indication information, where the first dynamic indication information indicates a terminal to switch to the first resource to perform the positioning service, and the first configuration information includes at least one of the following:

a dormant BWP;
configuration information of the dormant BWP;
a configuration relationship between a target measurement gap MG and the positioning service; and
an association relationship between the target MG and activation signaling of the positioning service.

Optionally, the first configuration information includes at least one of the following:

first indication information, where the first indication information indicates whether a serving cell corresponding to the terminal supports the positioning service;
second indication information, where the second indication information indicates whether the dormant BWP corresponding to the terminal supports the positioning service;
first type information, where the first type information indicates a type of the dormant BWP corresponding to the terminal, and the type of the dormant BWP is associated with whether the dormant BWP corresponding to the terminal supports the positioning service;
first enabling information, where the first enabling information indicates whether the positioning service is enabled in the dormant BWP corresponding to the terminal or the serving cell corresponding to the terminal; and
second enabling information, where the second enabling information indicates whether the dormant BWP corresponding to the terminal or the serving cell corresponding to the terminal supports a positioning service beyond a band range of a BWP.

Optionally, the first dynamic indication information includes a BWP switching command and first information, or the first dynamic indication information includes an MG activation command and the first information.

Optionally, the first dynamic indication information further includes second information, and the second information is configured for assisting the terminal in performing BWP switching, where the second information includes at least one of the following:

first cell identification information, where the first cell identification information indicates a cell configured for the positioning service;
second cell identification information, where the second cell identification information indicates an activation state of a cell that includes the dormant BWP, or an activation state of a cell group that includes the dormant BWP; and
BWP identification information, where the BWP identification information indicates a to-be-activated BWP.

Optionally, the first dynamic indication information further includes third information, and the third information is configured for assisting the terminal in switching to the first resource to perform the positioning service, where the third information includes at least one of the following:

first positioning service indication information, where the first positioning service indication information indicates to activate the positioning service;
second positioning service indication information, where the second positioning service indication information indicates to activate a target BWP of a first cell to perform the positioning service;
third positioning service indication information, where the third positioning service indication information indicates to activate a dormant BWP of a second cell to perform the positioning service; and
fourth positioning service indication information, where the fourth positioning service indication information indicates to activate the target MG to perform the positioning service.

Optionally, the first information includes at least one of location request information and an uplink resource scheduling command.

Optionally, the location request information includes at least one of the following:

a type of a location request;
whether a location of the terminal is requested;
a report periodicity of response location information;
a report gap of the response location information;
a report quantity of the response location information;
response time of the location request;
measurement time corresponding to the positioning service or scheduled time T corresponding to the positioning service;
response location information that indicates a location method specified for reporting;
a report type of a PRS measurement result; and
a pre-configured identifier of the location request.

Optionally, the uplink resource scheduling command includes at least one of the following:

uplink resource scheduling information;
location report-dedicated scheduling information;
a pre-configured identifier of a location request;
a type of the location request;
whether a location of the terminal is requested;
a report periodicity of response location information;
a report gap of the response location information;
a report quantity of the response location information;
response time of the location request;
measurement time corresponding to the positioning service or scheduled time T corresponding to the positioning service;
response location information that indicates a location method specified for reporting; and
a configuration of a CG or an identifier of the CG, where there is an association relationship between the CG and the PRS measurement or between the CG and a PRS measurement window.

Optionally, the first information includes the uplink resource scheduling command, and response location information sent by the terminal to the network side device includes at least one of the following:

a pre-configured report identifier;
positioning information;
a reason for failure to report the response location information;
a location method corresponding to a report;
whether there is unreported response location information; and
acknowledgement location request information.

Optionally, the positioning information includes at least one of the following:

information about an event of sending the response location information;
a measurement result and/or a location estimation;

a current measurement result and/or a current location estimation;
a finally obtained measurement result and/or a finally obtained location estimation;
a differential measurement result and/or a differential location estimation; and
a measurement result in a PRS measurement window and/or a location estimation in the PRS measurement window.

Optionally, the BWP switching command indicates any one of the following:

activating a serving cell to which a target BWP belongs;
activating the target BWP; and
activating the target BWP, wherein the target BWP is the dormant BWP, a BWP currently activated by the terminal, or a BWP activated for the first time by a serving cell.

Optionally, an activation state of the serving cell to which the target BWP belongs is configured as on when the serving cell is configured for the terminal, or is configured as on when the serving cell is added to the terminal; the activation state of the serving cell to which the target BWP belongs is configured as on before the terminal performs the positioning service.

Optionally, a radio network temporary identifier RNTI of the first dynamic indication information is associated with the positioning service, or the RNTI of the first dynamic indication information is associated with a power saving RNTI PS-RNTI.

Optionally, there is a first association relationship between the target MG and activation signaling of a PRS, and the first association relationship includes at least one of the following:

an activation state of the PRS is on, and an activation state of the target MG is on; the activation state of the PRS is off, and the activation state of the target MG is off;
the activation state of the PRS is on, and the target MG is a first MG; and the activation state of the PRS is off, and the target MG is a second MG.

Optionally, the first MG includes an MG for the PRS measurement and an MG for radio resource management RRM measurement, or the first MG includes the MG for the PRS measurement; and the second MG includes the MG for the RRM measurement.

Optionally, a length of the first MG is greater than or equal to a length of the second MG.

Optionally, there is a second association relationship between the first dynamic indication information and the PRS measurement or a PRS measurement window, and the second association relationship includes at least one of the following:

that a time domain location at which the first dynamic indication information is received is earlier than a time domain start point of the PRS measurement;
that the time domain location at which the first dynamic indication information is received is earlier than a time domain location obtained by subtracting first duration from the time domain start point of the PRS measurement;
that the time domain location at which the first dynamic indication information is received is earlier than a time domain start point of the PRS measurement window;
that the time domain location at which the first dynamic indication information is received is earlier than a time domain location obtained by subtracting the first duration from the time domain start point of the PRS measurement window;
that a frequency domain range of a PRS is within a band range of a target BWP;
that a frequency domain range of an SRS is within the band range of the target BWP; and
in a case that the first resource is the dormant BWP, PRS measurement or SRS sending beyond a band range of the dormant BWP is allowed.

Optionally, there is a third association relationship between the first dynamic indication information and scheduled time T, and the third association relationship includes at least one of the following:

that a time domain location at which the first dynamic indication information is received is earlier than the scheduled time T; and
that the time domain location at which the first dynamic indication information is received is earlier than a time domain location obtained by subtracting first duration from the scheduled time T.

Optionally, there is a fourth association relationship between the first configuration information and scheduled time T, and the fourth association relationship includes at least one of the following:

that a time domain location at which the first configuration information is received is earlier than the scheduled time T; and

that the time domain location at which the first configuration information is received is earlier than a time domain location obtained by subtracting second duration from the scheduled time T.

Optionally, the dormant BWP has at least one of the following features:

stopping a BWP-inactive timer;
starting a PRS measurement timer;
starting a CG associated with the PRS measurement;
starting resource scheduling associated with the PRS measurement;
skipping responding to other response location information than response location information of a first type;
sending an SRS on the dormant BWP;
measuring a PRS on the dormant BWP; and
reporting response location information on a CG associated with the dormant BWP.

Optionally, the response location information of the first type includes at least one of the following:

response location information transmitted on a physical uplink control channel PUCCH;
response location information of a first priority;
response location information whose delay requirement is less than a first threshold;
on-demand response location information;
aperiodic response location information; and
event-triggered response location information.

Optionally, the positioning apparatus may further include a sending module, where before switching to the first resource to perform the positioning service based on the positioning service indication signaling, the sending module is configured to send fourth information to a network side device, where the fourth information is configuration information of a PRS or measurement window information of the PRS.

Optionally, the positioning apparatus may further include a sending module, where before switching to the first resource to perform the positioning service based on the positioning service indication signaling, the sending module is configured to send fifth information to a network side device, where the fifth information is first resource indication information or first resource switching request information.

Optionally, the processing module is specifically configured to switch to the target MG to perform the positioning service when a BWP indicated by the positioning service indication signaling is a non-dormant BWP.

Optionally, the positioning apparatus may further include an obtaining module, where before switching to the first resource to perform the positioning service based on the positioning service indication signaling, the obtaining module is configured to obtain one or more pieces of BWP configuration information, where the one or more pieces of BWP configuration information include at least one of the following:

BWP configuration information configured by a network side device;
BWP configuration information indicated by the network side device; and
pre-defined BWP configuration information.

In the positioning apparatus provided in this embodiment of this application, the first dynamic indication information may indicate the terminal to switch to the first resource to perform the positioning service, and the first configuration information includes at least one of the dormant BWP, the configuration information of the dormant BWP, the configuration relationship between the target MG and the positioning service, and the association relationship between the target MG and the activation signaling of the positioning service. Therefore, the positioning apparatus may directly perform the positioning service based on the first dynamic indication information and at least one of the first configuration information, so that a physical layer latency of the positioning service can be reduced.

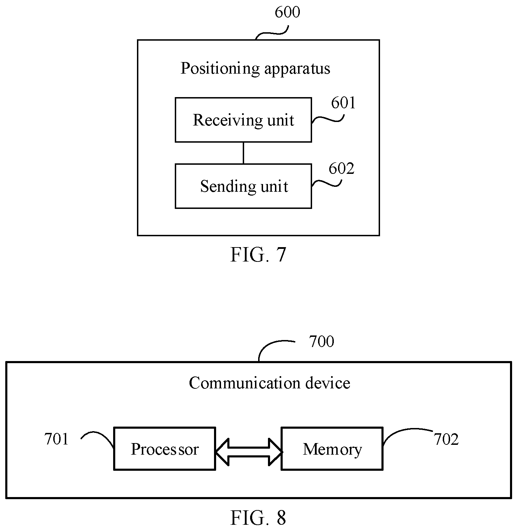

As shown in FIG. 7, an embodiment of this application provides a positioning apparatus 600. The positioning apparatus 600 includes a receiving unit 601 and a sending unit 602. The receiving unit 601 is configured to receive first target information, where the first target information includes at least one of configuration information of a PRS, measurement window information of the PRS, first resource indication information, and first resource switching request information; and the sending unit 602 is configured to send positioning service indication signaling to a terminal based on the first target information, where the positioning service indication signaling includes at least one of first configuration information and first dynamic indication information, where the first dynamic indication information indicates the terminal to switch to a first resource to perform a positioning service, the positioning service includes PRS measurement or SRS sending, and the first configuration information includes at least one of the following:

a dormant BWP;
configuration information of the dormant BWP;
a configuration relationship between a target MG and the positioning service; and
an association relationship between the target MG and activation signaling of the positioning service.

Optionally, in this embodiment of this application, the first configuration information may include at least one of the following:

first indication information, where the first indication information may indicate whether a serving cell corresponding to the terminal supports the positioning service;
second indication information, where the second indication information may indicate whether the dormant BWP corresponding to the terminal supports the positioning service;
first type information, where the first type information may indicate a type of the dormant BWP corresponding to the terminal, and the type of the dormant BWP is associated with whether the dormant BWP corresponding to the terminal supports the positioning service;
first enabling information, where the first enabling information may indicate whether the positioning service is enabled in the dormant BWP corresponding to the terminal or the serving cell corresponding to the terminal; and
second enabling information, where the second enabling information may indicate whether the dormant BWP corresponding to the terminal or the serving cell corresponding to the terminal supports a positioning service beyond a band range of a BWP.

Optionally, the first dynamic indication information may include a BWP switching command and first information, or the first dynamic indication information may include an MG activation command and the first information.
Optionally, in this embodiment of this application, the first information may include at least one of location request information and an uplink resource scheduling command.
Optionally, in this embodiment of this application, the first dynamic indication information further includes second information, and the second information is configured for assisting the terminal in performing BWP switching, where the second information may include at least one of the following:

first cell identification information, where the first cell identification information may indicate a cell configured for the positioning service;
second cell identification information, where the second cell identification information may indicate an activation state of a cell that includes the dormant BWP, or an activation state of a cell group that includes the dormant BWP; and
BWP identification information, where the BWP identification information may indicate a to-be-activated BWP.

Optionally, the first dynamic indication information may further include third information, and the third information may be configured for assisting the terminal in switching to the first resource to perform the positioning service, where the third information may include at least one of the following:

first positioning service indication information, where the first positioning service indication information may indicate to activate the positioning service;
second positioning service indication information, where the second positioning service indication information may indicate to activate a target BWP of a first cell to perform the positioning service;
third positioning service indication information, where the third positioning service indication information may indicate to activate a dormant BWP of a second cell to perform the positioning service; and
fourth positioning service indication information, where the fourth positioning service indication information may indicate to activate the target MG to perform the positioning service.

Optionally, the location request information may include at least one of the following:

a type of a location request;
whether a location of the terminal is requested;
a report periodicity of response location information;
a report gap of the response location information;
a report quantity of the response location information;

response time of the location request;
measurement time corresponding to the positioning service or scheduled time T corresponding to the positioning service;
response location information that indicates a location method specified for reporting;
a report type of a PRS measurement result; and
a pre-configured identifier of the location request.

Optionally, the uplink resource scheduling command may include at least one of the following:

uplink resource scheduling information;
location report-dedicated scheduling information;
a pre-configured identifier of a location request;
a type of the location request;
whether a location of the terminal is requested;
a report periodicity of response location information;
a report gap of the response location information;
a report quantity of the response location information;
response time of the location request;
measurement time corresponding to the positioning service or scheduled time T corresponding to the positioning service;
response location information that indicates a location method specified for reporting; and
a configuration of a CG or an identifier of the CG, where there is an association relationship between the CG and the PRS measurement or between the CG and a PRS measurement window.

Optionally, when the first information includes the uplink resource scheduling command, response location information sent by the terminal to the network side device may include at least one of the following:

a pre-configured report identifier;
positioning information;
a reason for failure to report the response location information;
a location method corresponding to a report;
whether there is unreported response location information; and
acknowledgement location request information.

Optionally, the positioning information may include at least one of the following:

information about an event of sending the response location information;
a measurement result and/or a location estimation;
a current measurement result and/or a current location estimation;
a finally obtained measurement result and/or a finally obtained location estimation;
a differential measurement result and/or a differential location estimation; and
a measurement result in a PRS measurement window and/or a location estimation in the PRS measurement window.

Optionally, the BWP switching command may indicate any one of the following:

activating a serving cell to which a target BWP belongs;
activating a target BWP; and
activating a target BWP, and the target BWP may be the dormant BWP, a BWP currently activated by the terminal, or a BWP activated for the first time by a serving cell.

Optionally, an activation state of the serving cell to which the target BWP belongs is configured as on when the serving cell is configured for the terminal, or is configured as on when the serving cell is added to the terminal; or the activation state of the serving cell to which the target BWP belongs is configured as on before the terminal performs the positioning service.

Optionally, an RNTI of the first dynamic indication information is associated with the positioning service, or the RNTI of the first dynamic indication information is associated with a power saving RNTI PS-RNTI.

Optionally, there is a first association relationship between the target MG and activation signaling of a PRS, and the first association relationship may include at least one of the following:

an activation state of the PRS is on, and an activation state of the target MG is on; the activation state of the PRS is off, and the activation state of the target MG is off;

the activation state of the PRS is on, and the target MG is a first MG; and the activation state of the PRS is off, and the target MG is a second MG.

Optionally, the first MG may include an MG for the PRS measurement and an MG for radio resource management RRM measurement, or the first MG may include the MG for the PRS measurement; and

the second MG may include the MG for the RRM measurement.

Optionally, a length of the first MG may be greater than or equal to a length of the second MG.

Optionally, there may be a second association relationship between the first dynamic indication information and the PRS measurement or a PRS measurement window, and the second association relationship may include at least one of the following:

that a time domain location at which the first dynamic indication information is received is earlier than a time domain start point of the PRS measurement;

that the time domain location at which the first dynamic indication information is received is earlier than a time domain location obtained by subtracting first duration from the time domain start point of the PRS measurement;

that the time domain location at which the first dynamic indication information is received is earlier than a time domain start point of the PRS measurement window;

that the time domain location at which the first dynamic indication information is received is earlier than a time domain location obtained by subtracting the first duration from the time domain start point of the PRS measurement window;

that a frequency domain range of a PRS is within a band range of a target BWP;

that a frequency domain range of an SRS is within the band range of the target BWP; and

in a case that the first resource is the dormant BWP, PRS measurement or SRS sending beyond a band range of the dormant BWP is allowed.

Optionally, there is a third association relationship between the first dynamic indication information and scheduled time T, and the third association relationship may include at least one of the following:

that a time domain location at which the first dynamic indication information is received is earlier than the scheduled time T; and

that the time domain location at which the first dynamic indication information is received is earlier than a time domain location obtained by subtracting first duration from the scheduled time T.

Optionally, there is a fourth association relationship between the first configuration information and scheduled location time T, and the fourth association relationship may include at least one of the following:

that a time domain location at which the first configuration information is received is earlier than the scheduled time T; and

that the time domain location at which the first configuration information is received is earlier than a time domain location obtained by subtracting second duration from the scheduled time T.

Optionally, the dormant BWP may have at least one of the following features:

stopping a BWP-inactive timer;
starting a PRS measurement timer;
starting a CG associated with the PRS measurement;
starting resource scheduling associated with the PRS measurement;
skipping responding to other response location information than response location information of a first type;
sending an SRS on the dormant BWP;
measuring a PRS on the dormant BWP; and
reporting response location information on a CG associated with the dormant BWP.

Optionally, the response location information of the first type may include at least one of the following:

response location information transmitted on a PUCCH;
response location information of a first priority;
response location information whose delay requirement is less than a first threshold;

on-demand response location information;

aperiodic response location information; and

event-triggered response location information.

In the positioning apparatus provided in this embodiment of this application, the first dynamic indication information may indicate the terminal to switch to the first resource to perform the positioning service, and the first configuration information includes at least one of the dormant BWP, the configuration information of the dormant BWP, the configuration relationship between the target MG and the positioning service, and the association relationship between the target MG and the activation signaling of the positioning service. Therefore, after the positioning apparatus sends the positioning service indication signaling to the terminal, the terminal may directly perform the positioning service based on the first dynamic indication information and at least one of the first configuration information, so that a physical layer latency of the positioning service can be reduced.

A positioning apparatus in embodiments of this application may be an apparatus, or an apparatus or an electronic device with an operating system; or may be a component, an integrated circuit, or a chip in a terminal. The apparatus or the electronic device may be a mobile terminal or a non-mobile terminal. For example, the mobile terminal may include, but is not limited to, the types of the terminal 11 listed above, and the non-mobile terminal may be a server, a network attached storage (Network Attached Storage, NAS), a personal computer (personal computer, PC), a television (television, TV), an automatic teller machine, a self-service machine, or the like, which are not specifically limited in embodiments of this application.

The positioning apparatus provided in embodiments of this application can implement all processes implemented by the method embodiments, and achieve technical effects. To avoid repetition, details are not described herein again.

Optionally, as shown in FIG. 8, an embodiment of this application further provides a communication device 700, including a processor 701, a memory 702, a program or instruction stored on the memory 702 and runnable on the processor 701. For example, when the communication device 700 is a terminal, the program or the instruction, when executed by the processor 701, implements the processes of the embodiments of the positioning method, and the same technical effects can be achieved. When the communication device 700 is a network side device, the program or the instruction, when executed by the processor 701, implements the processes of the embodiments of the positioning method, and the same technical effects can be achieved. To avoid repetition, details are not described herein again.

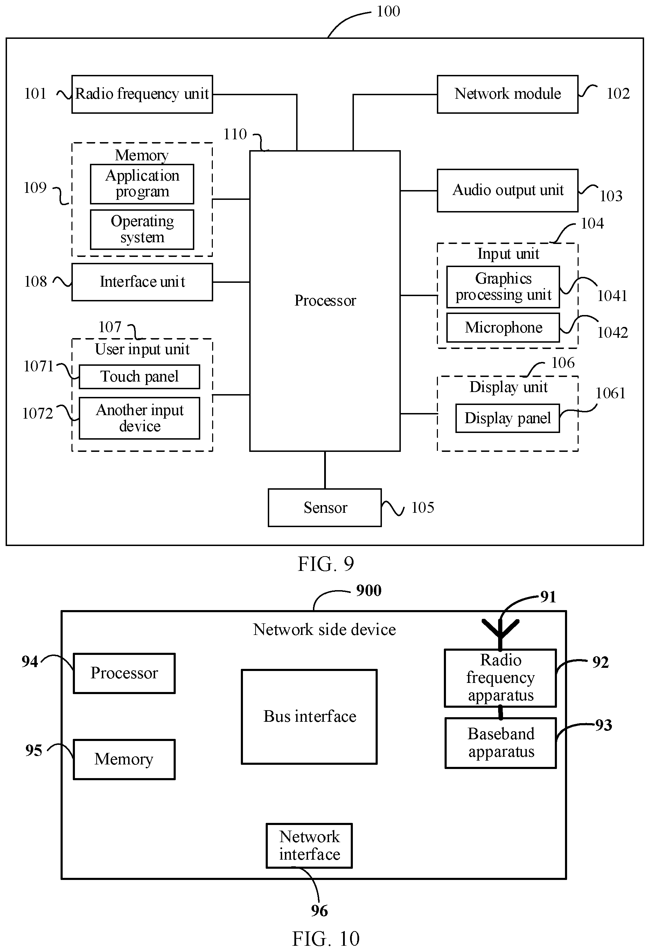

An embodiment of this application further provides a terminal. The terminal includes a processor and a communication interface. The processor is configured to switch, based on positioning service indication signaling, to a first resource to perform a positioning service, where the positioning service includes PRS measurement or SRS sending, and the positioning service indication signaling includes at least one of first configuration information and first dynamic indication information, where the first dynamic indication information indicates a terminal to switch to the first resource to perform the positioning service, and the first configuration information includes at least one of the following: a dormant BWP; configuration information of the dormant BWP; a configuration relationship between a target MG and the positioning service; and an association relationship between the target MG and activation signaling of the positioning service. The terminal embodiment corresponds to the foregoing terminal side method embodiment, and each implementation process and implementation of the foregoing method embodiment can be applied to the terminal embodiment, and can achieve the same technical effects. Specifically, FIG. 9 is a schematic diagram of a hardware structure of a terminal that implements embodiments of this application.

A terminal 100 includes, but is not limited to, at least part of components such as a radio frequency unit 101, a network module 102, an audio output unit 103, an input unit 104, a sensor 105, a display unit 106, a user input unit 107, an interface unit 108, a memory 109, and a processor 110.

It may be understood by those skilled in the art that the terminal 100 may further include a power supply (for example, a battery) for supplying power to various components, and the power supply may be logically connected to the processor 110 through a power management system, to implement functions such as managing charging or discharging, and power consumption management through the power management system. The terminal structure shown in FIG. 9 does not constitute a limitation to the terminal, and the terminal may include more or fewer components than illustrated, or a combination of specific components, or arrangement of different components, which are not described herein again.

It should be understood that, in this embodiment of this application, the input unit 104 may include a graphics processing unit (Graphics Processing Unit, GPU) 1041 and a microphone 1042. The graphics processing unit 1041 processes image data of a still picture or a video obtained by an image capture apparatus (such as a camera) in a video capture mode or an image capture mode. The display unit 106 may include a display panel 1061. The display panel 1061 may be configured in a form of a liquid crystal display, an organic light emitting diode, or the like. The user input unit 107 includes a touch panel 1071 and another input device 1072. The touch panel 1071 is also referred to as a touchscreen. The touch panel 1071 may include a touch detection apparatus and a touch controller. The another input device 1072 may include, but is not limited to, a physical keyboard, a function key (such as a volume control key, a switch key, or the like), a trackball, a mouse, and an operating lever, which is not described in detail herein.

In this embodiment of this application, the radio frequency unit 101 receives downlink data from a network side device and sends downlink data to the processor 110 for processing. In addition, the radio frequency unit sends uplink data to the network side device. Generally, the radio frequency unit 101 includes, but is not limited to, an antenna, at least one amplifier, a transceiver, a coupler, a low noise amplifier, a duplexer, and the like.

The memory 109 may be configured to store a software program or instruction and various data. The memory 109 may mainly include a program or instruction storage region and a data storage region. The program or instruction storage region may store an operating system, an application program or instruction required by at least one function (for example, a sound playback function and an image playback function), or the like. The memory 109 may include a high speed random access memory, and may also include a non-volatile memory. The nonvolatile memory may be a read-only memory (read-only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the non-volatile memory may be at least one magnetic disk storage device, a flash memory device, or other volatile solid-state storage devices.

Optionally, the processor 110 may include one or more processing units. Optionally, the processor 110 may integrate an application processor and a modem. The application processor mainly processes an operating system, a user interface, an application program or instruction, and the like. The modem mainly processes wireless communication, such as a baseband processor. It may be understood that the foregoing modem may not be integrated into the processor 110.

The processor is configured to switch, based on positioning service indication signaling, to a first resource to perform a positioning service, where the positioning service includes PRS measurement or SRS sending, and the positioning service indication signaling includes at least one of first configuration information and first dynamic indication information, where the first dynamic indication information indicates a terminal to switch to the first resource to perform the positioning service, and the first configuration information includes at least one of the following:

a dormant BWP;
configuration information of the dormant BWP;
a configuration relationship between a target measurement gap MG and the positioning service; and
an association relationship between the target MG and activation signaling of the positioning service.

Optionally, the first configuration information includes at least one of the following:

first indication information, where the first indication information indicates whether a serving cell corresponding to the terminal supports the positioning service;
second indication information, where the second indication information indicates whether the dormant BWP corresponding to the terminal supports the positioning service;
first type information, where the first type information indicates a type of the dormant BWP corresponding to the terminal, and the type of the dormant BWP is associated with whether the dormant BWP corresponding to the terminal supports the positioning service;
first enabling information, where the first enabling information indicates whether the positioning service is enabled in the dormant BWP corresponding to the terminal or the serving cell corresponding to the terminal; and
second enabling information, where the second enabling information indicates whether the dormant BWP corresponding to the terminal or the serving cell corresponding to the terminal supports a positioning service beyond a band range of a BWP.

Optionally, the first dynamic indication information includes a BWP switching command and first information, or the first dynamic indication information includes an MG activation command and the first information.

Optionally, the first dynamic indication information further includes second information, and the second information is configured for assisting the terminal in performing BWP switching, where the second information includes at least one of the following:

first cell identification information, where the first cell identification information indicates a cell configured for the positioning service;
second cell identification information, where the second cell identification information indicates an activation state of a cell that includes the dormant BWP, or an activation state of a cell group that includes the dormant BWP; and
BWP identification information, where the BWP identification information indicates a to-be-activated BWP.

Optionally, the first dynamic indication information further includes third information, and the third information is configured for assisting the terminal in switching to the first resource to perform the positioning service, where the third information includes at least one of the following:

first positioning service indication information, where the first positioning service indication information indicates to activate the positioning service;
second positioning service indication information, where the second positioning service indication information indicates to activate a target BWP of a first cell to perform the positioning service;
third positioning service indication information, where the third positioning service indication information indicates to activate a dormant BWP of a second cell to perform the positioning service; and
fourth positioning service indication information, where the fourth positioning service indication information indicates to activate the target MG to perform the positioning service.

Optionally, the first information includes at least one of location request information and an uplink resource scheduling command.

Optionally, the location request information includes at least one of the following:

a type of a location request;
whether a location of the terminal is requested;
a report periodicity of response location information;
a report gap of the response location information;
a report quantity of the response location information;
response time of the location request;
measurement time corresponding to the positioning service or scheduled time T corresponding to the positioning service;
response location information that indicates a location method specified for reporting;
a report type of a PRS measurement result; and
a pre-configured identifier of the location request.

Optionally, the uplink resource scheduling command includes at least one of the following:

uplink resource scheduling information;
location report-dedicated scheduling information;
a pre-configured identifier of a location request;
a type of the location request;
whether a location of the terminal is requested;
a report periodicity of response location information;
a report gap of the response location information;
a report quantity of the response location information;
response time of the location request;
measurement time corresponding to the positioning service or scheduled time T corresponding to the positioning service;
response location information that indicates a location method specified for reporting; and
a configuration of a CG or an identifier of the CG, where there is an association relationship between the CG and the PRS measurement or between the CG and a PRS measurement window.

Optionally, the first information includes the uplink resource scheduling command, and response location information sent by the terminal to a network side device includes at least one of the following:

a pre-configured report identifier;
positioning information;
a reason for failure to report the response location information;
a location method corresponding to a report;
whether there is unreported response location information; and
acknowledgement location request information.

Optionally, the positioning information includes at least one of the following:

information about an event of sending the response location information;

a measurement result and/or a location estimation;
a current measurement result and/or a current location estimation;
a finally obtained measurement result and/or a finally obtained location estimation;
a differential measurement result and/or a differential location estimation; and
a measurement result in a PRS measurement window and/or a location estimation in the PRS measurement window.

Optionally, the BWP switching command indicates any one of the following:

activating a serving cell to which a target BWP belongs;
activating the target BWP; and
activating the target BWP, wherein the target BWP is the dormant BWP, a BWP currently activated by the terminal, or a BWP activated for the first time by a serving cell.

Optionally, an activation state of the serving cell to which the target BWP belongs is configured as on when the serving cell is configured for the terminal, or is configured as on when the serving cell is added to the terminal; the activation state of the serving cell to which the target BWP belongs is configured as on before the terminal performs the positioning service.

Optionally, a radio network temporary identifier RNTI of the first dynamic indication information is associated with the positioning service, or the RNTI of the first dynamic indication information is associated with a power saving RNTI PS-RNTI.

Optionally, there is a first association relationship between the target MG and activation signaling of a PRS, and the first association relationship includes at least one of the following:

an activation state of the PRS is on, and an activation state of the target MG is on; the activation state of the PRS is off, and the activation state of the target MG is off;
the activation state of the PRS is on, and the target MG is a first MG; and the activation state of the PRS is off, and the target MG is a second MG.

Optionally, the first MG includes an MG for the PRS measurement and an MG for radio resource management RRM measurement, or the first MG includes the MG for the PRS measurement; and the second MG includes the MG for the RRM measurement.

Optionally, a length of the first MG is greater than or equal to a length of the second MG.

Optionally, there is a second association relationship between the first dynamic indication information and the PRS measurement or a PRS measurement window, and the second association relationship includes at least one of the following:

that a time domain location at which the first dynamic indication information is received is earlier than a time domain start point of the PRS measurement;
that the time domain location at which the first dynamic indication information is received is earlier than a time domain location obtained by subtracting first duration from the time domain start point of the PRS measurement;
that the time domain location at which the first dynamic indication information is received is earlier than a time domain start point of the PRS measurement window;
that the time domain location at which the first dynamic indication information is received is earlier than a time domain location obtained by subtracting the first duration from the time domain start point of the PRS measurement window;
that a frequency domain range of a PRS is within a band range of a target BWP;
that a frequency domain range of an SRS is within the band range of the target BWP; and
in a case that the first resource is the dormant BWP, PRS measurement or SRS sending beyond a band range of the dormant BWP is allowed.

Optionally, there is a third association relationship between the first dynamic indication information and scheduled time T, and the third association relationship includes at least one of the following:

that a time domain location at which the first dynamic indication information is received is earlier than the scheduled time T; and
that the time domain location at which the first dynamic indication information is received is earlier than a time domain location obtained by subtracting first duration from the scheduled time T.

Optionally, there is a fourth association relationship between the first configuration information and scheduled time T, and the fourth association relationship includes at least one of the following:

that a time domain location at which the first configuration information is received is earlier than the scheduled time T; and

that the time domain location at which the first configuration information is received is earlier than a time domain location obtained by subtracting second duration from the scheduled time T.

Optionally, the dormant BWP has at least one of the following features:

stopping a BWP-inactive timer;
starting a PRS measurement timer;
starting a CG associated with the PRS measurement;
starting resource scheduling associated with the PRS measurement;
skipping responding to other response location information than response location information of a first type;
sending an SRS on the dormant BWP;
measuring a PRS on the dormant BWP; and
reporting response location information on a CG associated with the dormant BWP.

Optionally, the response location information of the first type includes at least one of the following:

response location information transmitted on a physical uplink control channel PUCCH;
response location information of a first priority;
response location information whose delay requirement is less than a first threshold;
on-demand response location information;
aperiodic response location information; and
event-triggered response location information.

Optionally, before switching to the first resource to perform the positioning service based on the positioning service indication signaling, the radio frequency unit 101 is configured to send fourth information to a network side device, where the fourth information is configuration information of a PRS or measurement window information of the PRS.

Optionally, before switching to the first resource to perform the positioning service based on the positioning service indication signaling, the radio frequency unit 101 is configured to send fifth information to a network side device, where the fifth information is first resource indication information or first resource switching request information.

Optionally, the processor is specifically configured to switch to the target MG to perform the positioning service when a BWP indicated by the positioning service indication signaling is a non-dormant BWP.

Optionally, before switching to the first resource to perform the positioning service based on the positioning service indication signaling, the processor or the radio frequency unit is configured to obtain one or more pieces of BWP configuration information, where the one or more pieces of BWP configuration information include at least one of the following:

BWP configuration information configured by a network side device;
BWP configuration information indicated by the network side device; and
pre-defined BWP configuration information.

It should be noted that, functions/steps implemented by the processor 110 are the same as functions/steps implemented by the processing module in the positioning apparatus; functions/steps implemented by the radio frequency unit 101 are the same as functions/steps implemented by the sending module in the positioning apparatus; and functions/steps implemented by the processor 110 or the radio frequency unit 101 are the same as functions/steps implemented by the obtaining module in the positioning apparatus.

In other words, the processing module in the positioning apparatus may be implemented by the processor 110, and the sending module in the positioning apparatus may be implemented by the radio frequency unit 101; and the obtaining module in the positioning apparatus may be implemented by the processor 110 or the radio frequency unit 101.

In the terminal provided in this embodiment of this application, the first dynamic indication information may indicate the terminal to switch to the first resource to perform the positioning service, and the first configuration information includes at least one of the dormant BWP, the configuration information of the dormant BWP, the configuration relationship between the target MG and the positioning service, and the association relationship between the target MG and the activation signaling of the positioning service. Therefore, the terminal may directly perform the positioning service based on the first dynamic indication information and at least one of the first configuration information, so that a physical layer latency of the positioning service can be reduced.

An embodiment of this application further provides a network side device. The network side device includes a processor and a communication interface. The communication interface is configured to receive first target information, where the first target information includes at least one of configuration information of a PRS, measurement window information of the PRS, first resource indication information, and first resource switching request information; and send positioning service indication signaling to a terminal based on the first target information, where the positioning service indication signaling includes at least one of first configuration information and first dynamic indication information, where the first dynamic indication information indicates the terminal to switch to a first resource to perform a positioning service, the positioning service includes PRS measurement or SRS sending, and the first configuration information includes at least one of the following: a dormant BWP; configuration information of the dormant BWP; a configuration relationship between a target MG and the positioning service; and an association relationship between the target MG and activation signaling of the positioning service. The network side device embodiment corresponds to the foregoing network side device method embodiment, and each implementation process and implementation of the foregoing method embodiment can be applied to the network side device embodiment, and can achieve the same technical effects.

Specifically, an embodiment of this application further provides a network side device. As shown in FIG. 10, a network side device 900 includes an antenna 91, a radio frequency apparatus 92, and a baseband apparatus 93. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes information that is to be sent, and sends the information to the radio frequency apparatus 92. The radio frequency apparatus 92 processes the received information and sends the information by using the antenna 91.

A frequency band processing apparatus may be located in the baseband apparatus 93, so that the method executed by the network side device in the foregoing embodiments can be implemented in the baseband apparatus 93. The baseband apparatus 93 includes a processor 94 and a memory 95.

The baseband apparatus 93 may include, for example, at least one baseband plate. A plurality of chips are disposed on the baseband plate. As shown in FIG. 10, one of the plurality of chips is, for example, the processor 94, and is connected to the memory 95, to invoke a program in the memory 95 to perform operations of the network side device in the foregoing method embodiments.

The baseband apparatus 93 may further include a network interface 96, configured to exchange information with the radio frequency apparatus 92. The interface is, for example, a common public radio interface (common public radio interface, CPRI for short).

Specifically, the network side device in this embodiment of the present invention further includes: an instruction or program stored in the memory 95 and runnable on the processor 94, and the processor 94 invokes the instruction or program stored on the memory 95 to perform the method executed by various modules shown in FIG. 7, and can also achieve the same technical effects. To avoid repetition, details are not described herein again.

It should be noted that, functions/steps implemented by the radio frequency apparatus 92 are the same as functions/steps implemented by the receiving unit and the sending unit in the positioning apparatus.

An embodiment of this application further provides a readable storage medium, storing a program or instruction. The program or instruction, when executed by a processor, implements all processes of the embodiments of the positioning method, and can achieve the same technical effects. To avoid repetition, details are not described herein again.

The processor is the processor in the terminal in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, including a processor and a communication interface. The communication interface is coupled to the processor, and the processor is configured to run a program or instruction, to implement all processes of the embodiments of the positioning method, and can achieve the same technical effects. To avoid repetition, details are not described herein again.

It should be understood that, the chip mentioned in this embodiment of this application may also be referred to as a system-level chip, a system chip, a chip system, a system on chip, or the like.

It should be noted that, the term " include", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one ..." does not exclude that there are still other same elements in the processes, methods, objects, or apparatuses. In addition, it should be noted that the scope of the methods and apparatuses in the implementations of this application is not limited to performing the functions in the order shown or discussed, but may also include performing, according to involved functions, the functions basically simultaneously or in a reverse order. For example, the described methods may be performed in an order different from that described, and various steps may also be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions in this application essentially or the part contributing to the existing technologies may be implemented in the form of a software product. The computer software product is stored in a storage medium (for example, a read-only memory (ROM)/random access memory (RAM), a magnetic disk or an optical disc), and includes several instructions for instructing a terminal (which may be a mobile phone, a computer, a server, an air conditioner, a network side device, or the like) to perform the method described in embodiments of this application.

Embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

**Claims**

1. A positioning method, wherein the method comprises:

   switching, by a terminal based on positioning service indication signaling, to a first resource to perform a positioning service, wherein the positioning service comprises positioning reference signal PRS measurement or sounding reference signal SRS sending, and the positioning service indication signaling comprises at least one of first configuration information and first dynamic indication information, wherein
   the first dynamic indication information indicates the terminal to switch to the first resource to perform the positioning service, and the first configuration information comprises at least one of following:

   a dormant bandwidth part BWP;
   configuration information of the dormant BWP;
   a configuration relationship between a target measurement gap MG and the positioning service; and
   an association relationship between the target MG and activation signaling of the positioning service.

2. The method according to claim 1, wherein the first configuration information comprises at least one of following:

   first indication information, wherein the first indication information indicates whether a serving cell corresponding to the terminal supports the positioning service;
   second indication information, wherein the second indication information indicates whether a dormant BWP corresponding to the terminal supports the positioning service;
   first type information, wherein the first type information indicates a type of the dormant BWP corresponding to the terminal, and the type of the dormant BWP is associated with whether the dormant BWP corresponding to the terminal supports the positioning service;
   first enabling information, wherein the first enabling information indicates whether the positioning service is enabled in the dormant BWP corresponding to the terminal or the serving cell corresponding to the terminal; and
   second enabling information, wherein the second enabling information indicates whether the dormant BWP corresponding to the terminal or the serving cell corresponding to the terminal supports a positioning service beyond a band range of a BWP.

3. The method according to claim 1, wherein the first dynamic indication information comprises a BWP switching command and first information, or the first dynamic indication information comprises an MG activation command and the first information.

4. The method according to claim 1, wherein the first dynamic indication information further comprises second information, and the second information is configured for assisting the terminal in performing BWP switching, wherein the second information comprises at least one of following:

   first cell identification information, wherein the first cell identification information indicates a cell configured for the positioning service;

second cell identification information, wherein the second cell identification information indicates an activation state of a cell that comprises the dormant BWP, or an activation state of a cell group that comprises the dormant BWP; and

BWP identification information, wherein the BWP identification information indicates a to-be-activated BWP.

5. The method according to claim 1, wherein the first dynamic indication information further comprises third information, and the third information is configured for assisting the terminal in switching to the first resource to perform the positioning service, wherein

the third information comprises at least one of following:

first positioning service indication information, wherein the first positioning service indication information indicates to activate the positioning service;

second positioning service indication information, wherein the second positioning service indication information indicates to activate a target BWP of a first cell to perform the positioning service;

third positioning service indication information, wherein the third positioning service indication information indicates to activate a dormant BWP of a second cell to perform the positioning service; and

fourth positioning service indication information, wherein the fourth positioning service indication information indicates to activate the target MG to perform the positioning service.

6. The method according to claim 3, wherein the first information comprises at least one of location request information and an uplink resource scheduling command.

7. The method according to claim 6, wherein the location request information comprises at least one of following:

a type of a location request;

whether a location of the terminal is requested;

a report periodicity of response location information;

a report gap of the response location information;

a report quantity of the response location information;

response time of the location request;

measurement time corresponding to the positioning service or scheduled time T corresponding to the positioning service;

response location information that indicates a location method specified for reporting;

a report type of a PRS measurement result; and

a pre-configured identifier of the location request.

8. The method according to claim 6, wherein the uplink resource scheduling command comprises at least one of following:

uplink resource scheduling information;

location report-dedicated scheduling information;

a pre-configured identifier of a location request;

a type of the location request;

whether a location of the terminal is requested;

a report periodicity of response location information;

a report gap of the response location information;

a report quantity of the response location information;

response time of the location request;

measurement time corresponding to the positioning service or scheduled time T corresponding to the positioning service;

response location information that indicates a location method specified for reporting; and

a configuration of a configured grant CG or an identifier of the CG, wherein there is an association relationship between the CG and the PRS measurement or between the CG and a PRS measurement window.

9. The method according to claim 6, wherein the first information comprises the uplink resource scheduling command, and response location information sent by the terminal to a network side device comprises at least one of following:

a pre-configured report identifier;

positioning information;
a reason for failure to report the response location information;
a location method corresponding to a report;
whether there is unreported response location information; and
acknowledgement location request information.

10. The method according to claim 9, wherein the positioning information comprises at least one of following:

information about an event of sending the response location information;
a measurement result and/or a location estimation;
a current measurement result and/or a current location estimation;
a finally obtained measurement result and/or a finally obtained location estimation;
a differential measurement result and/or a differential location estimation; and
a measurement result in a PRS measurement window and/or a location estimation in the PRS measurement window.

11. The method according to claim 3, wherein the BWP switching command indicates any one of following:

activating a serving cell to which a target BWP belongs;
activating the target BWP; and
activating the target BWP, wherein the target BWP is the dormant BWP, a BWP currently activated by the terminal, or a BWP activated for the first time by a serving cell.

12. The method according to claim 11, wherein an activation state of the serving cell to which the target BWP belongs is configured as on when the serving cell is configured for the terminal, or is configured as on when the serving cell is added to the terminal; or
the activation state of the serving cell to which the target BWP belongs is configured as on before the terminal performs the positioning service.

13. The method according to claim 1, wherein a radio network temporary identifier RNTI of the first dynamic indication information is associated with the positioning service, or the RNTI of the first dynamic indication information is associated with a power saving RNTI PS-RNTI.

14. The method according to claim 1, wherein there is a first association relationship between the target MG and activation signaling of a PRS, and the first association relationship comprises at least one of following:

an activation state of the PRS is on, and an activation state of the target MG is on; the activation state of the PRS is off, and the activation state of the target MG is off;
the activation state of the PRS is on, and the target MG is a first MG; and the activation state of the PRS is off, and the target MG is a second MG.

15. The method according to claim 14, wherein the first MG comprises an MG for the PRS measurement and an MG for radio resource management RRM measurement, or the first MG comprises the MG for the PRS measurement; and the second MG comprises the MG for the RRM measurement.

16. The method according to claim 14 or 15, wherein a length of the first MG is greater than or equal to a length of the second MG.

17. The method according to claim 1, wherein there is a second association relationship between the first dynamic indication information and the PRS measurement or a PRS measurement window, and the second association relationship comprises at least one of following:

that a time domain location at which the first dynamic indication information is received is earlier than a time domain start point of the PRS measurement;
that the time domain location at which the first dynamic indication information is received is earlier than a time domain location obtained by subtracting first duration from the time domain start point of the PRS measurement;
that the time domain location at which the first dynamic indication information is received is earlier than a time domain start point of the PRS measurement window;

that the time domain location at which the first dynamic indication information is received is earlier than a time domain location obtained by subtracting the first duration from the time domain start point of the PRS measurement window;

that a frequency domain range of a PRS is within a band range of a target BWP;

that a frequency domain range of an SRS is within the band range of the target BWP; and

in a case that the first resource is the dormant BWP, PRS measurement or SRS sending beyond a band range of the dormant BWP is allowed.

18. The method according to claim 1, wherein there is a third association relationship between the first dynamic indication information and scheduled time T, and the third association relationship comprises at least one of following:

that a time domain location at which the first dynamic indication information is received is earlier than the scheduled time T; and

that the time domain location at which the first dynamic indication information is received is earlier than a time domain location obtained by subtracting first duration from the scheduled time T.

19. The method according to claim 1, wherein there is a fourth association relationship between the first configuration information and scheduled time T, and the fourth association relationship comprises at least one of following:

that a time domain location at which the first configuration information is received is earlier than the scheduled time T; and

that the time domain location at which the first configuration information is received is earlier than a time domain location obtained by subtracting second duration from the scheduled time T.

20. The method according to claim 1, wherein the dormant BWP has at least one of following features:

stopping a BWP-inactive timer;
starting a PRS measurement timer;
starting a CG associated with the PRS measurement;
starting resource scheduling associated with the PRS measurement;
skipping responding to other response location information than response location information of a first type;
sending an SRS on the dormant BWP;
measuring a PRS on the dormant BWP; and
reporting response location information on a CG associated with the dormant BWP.

21. The method according to claim 20, wherein the response location information of the first type comprises at least one of following:

response location information transmitted on a physical uplink control channel PUCCH;
response location information of a first priority;
response location information whose delay requirement is less than a first threshold;
on-demand response location information;
aperiodic response location information; and
event-triggered response location information.

22. The method according to claim 1, wherein before the switching, by a terminal based on positioning service indication signaling, to a first resource to perform a positioning service, the method further comprises:
sending, by the terminal, fourth information to a network side device, wherein the fourth information is configuration information of a PRS or measurement window information of the PRS.

23. The method according to claim 1, wherein before the switching, by a terminal based on positioning service indication signaling, to a first resource to perform a positioning service, the method further comprises:
sending, by the terminal, fifth information to a network side device, wherein the fifth information is first resource indication information or first resource switching request information.

24. The method according to claim 1, wherein the switching, by a terminal based on positioning service indication signaling, to a first resource to perform a positioning service comprises:
switching, by the terminal in a case that a BWP indicated by the positioning service indication signaling is a non-dormant BWP, to the target MG to perform the positioning service.

25. The method according to claim 1, wherein before the switching, by a terminal based on positioning service indication signaling, to a first resource to perform a positioning service, the method further comprises:

obtaining, by the terminal, one or more pieces of BWP configuration information, wherein
the one or more pieces of BWP configuration information comprise at least one of following:

BWP configuration information configured by a network side device;
BWP configuration information indicated by the network side device; and
pre-defined BWP configuration information.

26. A positioning method, wherein the method comprises:

receiving, by a network side device, first target information, wherein the first target information comprises at least one of configuration information of a positioning reference signal PRS, measurement window information of the PRS, first resource indication information, and first resource switching request information; and
sending, by the network side device, positioning service indication signaling to a terminal based on the first target information, wherein the positioning service indication signaling comprises at least one of first configuration information and first dynamic indication information, wherein
the first dynamic indication information indicates the terminal to switch to a first resource to perform a positioning service, the positioning service comprises PRS measurement or sounding reference signal SRS sending, and the first configuration information comprises at least one of following:

a dormant bandwidth part BWP;
configuration information of the dormant BWP;
a configuration relationship between a target measurement gap MG and the positioning service; and
an association relationship between the target MG and activation signaling of the positioning service.

27. The method according to claim 26, wherein the first configuration information comprises at least one of following:

first indication information, wherein the first indication information indicates whether a serving cell corresponding to the terminal supports the positioning service;
second indication information, wherein the second indication information indicates whether a dormant BWP corresponding to the terminal supports the positioning service;
first type information, wherein the first type information indicates a type of the dormant BWP corresponding to the terminal, and the type of the dormant BWP is associated with whether the dormant BWP corresponding to the terminal supports the positioning service;
first enabling information, wherein the first enabling information indicates whether the positioning service is enabled in the dormant BWP corresponding to the terminal or the serving cell corresponding to the terminal; and
second enabling information, wherein the second enabling information indicates whether the dormant BWP corresponding to the terminal or the serving cell corresponding to the terminal supports a positioning service beyond a band range of a BWP.

28. The method according to claim 26, wherein the first dynamic indication information comprises a BWP switching command and first information, or the first dynamic indication information comprises an MG activation command and the first information.

29. The method according to claim 26, wherein the first dynamic indication information further comprises second information, and the second information is configured for assisting the terminal in performing BWP switching, wherein the second information comprises at least one of following:

first cell identification information, wherein the first cell identification information indicates a cell configured for the positioning service;
second cell identification information, wherein the second cell identification information indicates an activation state of a cell that comprises the dormant BWP, or an activation state of a cell group that comprises the dormant BWP; and
BWP identification information, wherein the BWP identification information indicates a to-be-activated BWP.

**30.** The method according to claim 26, wherein the first dynamic indication information further comprises third information, and the third information is configured for assisting the terminal in switching to the first resource to perform the positioning service, wherein
the third information comprises at least one of following:

first positioning service indication information, wherein the first positioning service indication information indicates to activate the positioning service;
second positioning service indication information, wherein the second positioning service indication information indicates to activate a target BWP of a first cell to perform the positioning service;
third positioning service indication information, wherein the third positioning service indication information indicates to activate a dormant BWP of a second cell to perform the positioning service; and
fourth positioning service indication information, wherein the fourth positioning service indication information indicates to activate the target MG to perform the positioning service.

**31.** The method according to claim 28, wherein the first information comprises at least one of location request information and an uplink resource scheduling command.

**32.** The method according to claim 31, wherein the location request information comprises at least one of following:

a type of a location request;
whether a location of the terminal is requested;
a report periodicity of response location information;
a report gap of the response location information;
a report quantity of the response location information;
response time of the location request;
measurement time corresponding to the positioning service or scheduled time T corresponding to the positioning service;
response location information that indicates a location method specified for reporting;
a report type of a PRS measurement result; and
a pre-configured identifier of the location request.

**33.** The method according to claim 31, wherein the uplink resource scheduling command comprises at least one of following:

uplink resource scheduling information;
location report-dedicated scheduling information;
a pre-configured identifier of a location request;
a type of the location request;
whether a location of the terminal is requested;
a report periodicity of response location information;
a report gap of the response location information;
a report quantity of the response location information;
response time of the location request;
measurement time corresponding to the positioning service or scheduled time T corresponding to the positioning service;
response location information that indicates a location method specified for reporting; and
a configuration of a configured grant CG or an identifier of the CG, wherein there is an association relationship between the CG and the PRS measurement or between the CG and a PRS measurement window.

**34.** The method according to claim 31, wherein the first information comprises the uplink resource scheduling command, and response location information sent by the terminal to the network side device comprises at least one of following:

a pre-configured report identifier;
positioning information;
a reason for failure to report the response location information;
a location method corresponding to a report;
whether there is unreported response location information; and
acknowledgement location request information.

**35.** The method according to claim 34, wherein the positioning information comprises at least one of following:

information about an event of sending the response location information;
a measurement result and/or a location estimation;
a current measurement result and/or a current location estimation;
a finally obtained measurement result and/or a finally obtained location estimation;
a differential measurement result and/or a differential location estimation; and
a measurement result in a PRS measurement window and/or a location estimation in the PRS measurement window.

**36.** The method according to claim 28, wherein the BWP switching command indicates any one of following:

activating a serving cell to which a target BWP belongs;
activating the target BWP; and
activating the target BWP, wherein the target BWP is the dormant BWP, a BWP currently activated by the terminal, or a BWP activated for the first time by a serving cell.

**37.** The method according to claim 36, wherein an activation state of the serving cell to which the target BWP belongs is configured as on when the serving cell is configured for the terminal, or is configured as on when the serving cell is added to the terminal; or
the activation state of the serving cell to which the target BWP belongs is configured as on before the terminal performs the positioning service.

**38.** The method according to claim 26, wherein a radio network temporary identifier RNTI of the first dynamic indication information is associated with the positioning service, or the RNTI of the first dynamic indication information is associated with a power saving RNTI PS-RNTI.

**39.** The method according to claim 26, wherein there is a first association relationship between the target MG and activation signaling of a PRS, and the first association relationship comprises at least one of following:

an activation state of the PRS is on, and an activation state of the target MG is on; the activation state of the PRS is off, and the activation state of the target MG is off;
the activation state of the PRS is on, and the target MG is a first MG; and the activation state of the PRS is off, and the target MG is a second MG.

**40.** The method according to claim 39, wherein the first MG comprises an MG for the PRS measurement and an MG for radio resource management RRM measurement, or the first MG comprises the MG for the PRS measurement; and the second MG comprises the MG for the RRM measurement.

**41.** The method according to claim 39 or 40, wherein a length of the first MG is greater than or equal to a length of the second MG.

**42.** The method according to claim 26, wherein there is a second association relationship between the first dynamic indication information and the PRS measurement or a PRS measurement window, and the second association relationship comprises at least one of following:

that a time domain location at which the first dynamic indication information is received is earlier than a time domain start point of the PRS measurement;
that the time domain location at which the first dynamic indication information is received is earlier than a time domain location obtained by subtracting first duration from the time domain start point of the PRS measurement;
that the time domain location at which the first dynamic indication information is received is earlier than a time domain start point of the PRS measurement window;
that the time domain location at which the first dynamic indication information is received is earlier than a time domain location obtained by subtracting the first duration from the time domain start point of the PRS measurement window;
that a frequency domain range of a PRS is within a band range of a target BWP;
that a frequency domain range of an SRS is within the band range of the target BWP; and
in a case that the first resource is the dormant BWP, PRS measurement or SRS sending beyond a band range of the dormant BWP is allowed.

43. The method according to claim 26, wherein there is a third association relationship between the first dynamic indication information and scheduled time T, and the third association relationship comprises at least one of following:

that a time domain location at which the first dynamic indication information is received is earlier than the scheduled time T; and
that the time domain location at which the first dynamic indication information is received is earlier than a time domain location obtained by subtracting first duration from the scheduled time T.

44. The method according to claim 26, wherein there is a fourth association relationship between the first configuration information and scheduled location time T, and the fourth association relationship comprises at least one of following:

that a time domain location at which the first configuration information is received is earlier than the scheduled time T; and
that the time domain location at which the first configuration information is received is earlier than a time domain location obtained by subtracting second duration from the scheduled time T.

45. The method according to claim 26, wherein the dormant BWP has at least one of following features:

stopping a BWP-inactive timer;
starting a PRS measurement timer;
starting a CG associated with the PRS measurement;
starting resource scheduling associated with the PRS measurement;
skipping responding to other response location information than response location information of a first type;
sending an SRS on the dormant BWP;
measuring a PRS on the dormant BWP; and
reporting response location information on a CG associated with the dormant BWP.

46. The method according to claim 45, wherein the response location information of the first type comprises at least one of following:

response location information transmitted on a physical uplink control channel PUCCH;
response location information of a first priority;
response location information whose delay requirement is less than a first threshold;
on-demand response location information;
aperiodic response location information; and
event-triggered response location information.

47. A positioning apparatus, wherein the positioning apparatus comprises a processing module, wherein

the processing module is configured to switch, based on positioning service indication signaling, to a first resource to perform a positioning service, wherein the positioning service comprises positioning reference signal PRS measurement or sounding reference signal SRS sending, and the positioning service indication signaling comprises at least one of first configuration information and first dynamic indication information, wherein the first dynamic indication information indicates a terminal to switch to the first resource to perform the positioning service, and the first configuration information comprises at least one of following:

a dormant bandwidth part BWP;
configuration information of the dormant BWP;
a configuration relationship between a target measurement gap MG and the positioning service; and
an association relationship between the target MG and activation signaling of the positioning service.

48. The apparatus according to claim 47, wherein the first configuration information comprises at least one of following:

first indication information, wherein the first indication information indicates whether a serving cell corresponding to the terminal supports the positioning service;
second indication information, wherein the second indication information indicates whether a dormant BWP corresponding to the terminal supports the positioning service;

first type information, wherein the first type information indicates a type of the dormant BWP corresponding to the terminal, and the type of the dormant BWP is associated with whether the dormant BWP corresponding to the terminal supports the positioning service;

first enabling information, wherein the first enabling information indicates whether the positioning service is enabled in the dormant BWP corresponding to the terminal or the serving cell corresponding to the terminal; and

second enabling information, wherein the second enabling information indicates whether the dormant BWP corresponding to the terminal or the serving cell corresponding to the terminal supports a positioning service beyond a band range of a BWP.

49. The apparatus according to claim 47, wherein the first dynamic indication information comprises a BWP switching command and first information, or the first dynamic indication information comprises an MG activation command and the first information.

50. The apparatus according to claim 47, wherein the first dynamic indication information further comprises second information, and the second information is configured for assisting the terminal in performing BWP switching, wherein the second information comprises at least one of following:

first cell identification information, wherein the first cell identification information indicates a cell configured for the positioning service;

second cell identification information, wherein the second cell identification information indicates an activation state of a cell that comprises the dormant BWP, or an activation state of a cell group that comprises the dormant BWP; and

BWP identification information, wherein the BWP identification information indicates a to-be-activated BWP.

51. The apparatus according to claim 47, wherein the first dynamic indication information further comprises third information, and the third information is configured for assisting the terminal in switching to the first resource to perform the positioning service, wherein

the third information comprises at least one of following:

first positioning service indication information, wherein the first positioning service indication information indicates to activate the positioning service;

second positioning service indication information, wherein the second positioning service indication information indicates to activate a target BWP of a first cell to perform the positioning service;

third positioning service indication information, wherein the third positioning service indication information indicates to activate a dormant BWP of a second cell to perform the positioning service; and

fourth positioning service indication information, wherein the fourth positioning service indication information indicates to activate the target MG to perform the positioning service.

52. The apparatus according to claim 49, wherein the first information comprises at least one of location request information and an uplink resource scheduling command.

53. The apparatus according to claim 52, wherein the location request information comprises at least one of following:

a type of a location request;
whether a location of the terminal is requested;
a report periodicity of response location information;
a report gap of the response location information;
a report quantity of the response location information;
response time of the location request;
measurement time corresponding to the positioning service or scheduled time T corresponding to the positioning service;
response location information that indicates a location method specified for reporting;
a report type of a PRS measurement result; and
a pre-configured identifier of the location request.

54. The apparatus according to claim 52, wherein the uplink resource scheduling command comprises at least one of following:

uplink resource scheduling information;
location report-dedicated scheduling information;
a pre-configured identifier of a location request;
a type of the location request;
whether a location of the terminal is requested;
a report periodicity of response location information;
a report gap of the response location information;
a report quantity of the response location information;
response time of the location request;
measurement time corresponding to the positioning service or scheduled time T corresponding to the positioning service;
response location information that indicates a location method specified for reporting; and
a configuration of a configured grant CG or an identifier of the CG, wherein there is an association relationship between the CG and the PRS measurement or between the CG and a PRS measurement window.

55. The apparatus according to claim 52, wherein the first information comprises the uplink resource scheduling command, and response location information sent by the terminal to a network side device comprises at least one of following:

a pre-configured report identifier;
positioning information;
a reason for failure to report the response location information;
a location method corresponding to a report;
whether there is unreported response location information; and
acknowledgement location request information.

56. The apparatus according to claim 55, wherein the positioning information comprises at least one of following:

information about an event of sending the response location information;
a measurement result and/or a location estimation;
a current measurement result and/or a current location estimation;
a finally obtained measurement result and/or a finally obtained location estimation;
a differential measurement result and/or a differential location estimation; and
a measurement result in a PRS measurement window and/or a location estimation in the PRS measurement window.

57. The apparatus according to claim 49, wherein the BWP switching command indicates any one of following:

activating a serving cell to which a target BWP belongs;
activating the target BWP; and
activating the target BWP, wherein the target BWP is the dormant BWP, a BWP currently activated by the terminal, or a BWP activated for the first time by a serving cell.

58. The apparatus according to claim 57, wherein an activation state of the serving cell to which the target BWP belongs is configured as on when the serving cell is configured for the terminal, or is configured as on when the serving cell is added to the terminal; or
the activation state of the serving cell to which the target BWP belongs is configured as on before the terminal performs the positioning service.

59. The apparatus according to claim 47, wherein a radio network temporary identifier RNTI of the first dynamic indication information is associated with the positioning service, or the RNTI of the first dynamic indication information is associated with a power saving RNTI PS-RNTI.

60. The apparatus according to claim 47, wherein there is a first association relationship between the target MG and activation signaling of a PRS, and the first association relationship comprises at least one of following:

an activation state of the PRS is on, and an activation state of the target MG is on; the activation state of the PRS is off, and the activation state of the target MG is off;

the activation state of the PRS is on, and the target MG is a first MG; and the activation state of the PRS is off, and the target MG is a second MG.

61. The apparatus according to claim 60, wherein the first MG comprises an MG for the PRS measurement and an MG for radio resource management RRM measurement, or the first MG comprises the MG for the PRS measurement; and the second MG comprises the MG for the RRM measurement.

62. The apparatus according to claim 60 or 61, wherein a length of the first MG is greater than or equal to a length of the second MG.

63. The apparatus according to claim 47, wherein there is a second association relationship between the first dynamic indication information and the PRS measurement or a PRS measurement window, and the second association relationship comprises at least one of following:

that a time domain location at which the first dynamic indication information is received is earlier than a time domain start point of the PRS measurement;
that the time domain location at which the first dynamic indication information is received is earlier than a time domain location obtained by subtracting first duration from the time domain start point of the PRS measurement;
that the time domain location at which the first dynamic indication information is received is earlier than a time domain start point of the PRS measurement window;
that the time domain location at which the first dynamic indication information is received is earlier than a time domain location obtained by subtracting the first duration from the time domain start point of the PRS measurement window;
that a frequency domain range of a PRS is within a band range of a target BWP;
that a frequency domain range of an SRS is within the band range of the target BWP; and
in a case that the first resource is the dormant BWP, PRS measurement or SRS sending beyond a band range of the dormant BWP is allowed.

64. The apparatus according to claim 47, wherein there is a third association relationship between the first dynamic indication information and scheduled time T, and the third association relationship comprises at least one of following:

that a time domain location at which the first dynamic indication information is received is earlier than the scheduled time T; and
that the time domain location at which the first dynamic indication information is received is earlier than a time domain location obtained by subtracting first duration from the scheduled time T.

65. The apparatus according to claim 47, wherein there is a fourth association relationship between the first configuration information and scheduled time T, and the fourth association relationship comprises at least one of following:

that a time domain location at which the first configuration information is received is earlier than the scheduled time T; and
that the time domain location at which the first configuration information is received is earlier than a time domain location obtained by subtracting second duration from the scheduled time T.

66. The apparatus according to claim 47, wherein the dormant BWP has at least one of following features:

stopping a BWP-inactive timer;
starting a PRS measurement timer;
starting a CG associated with the PRS measurement;
starting resource scheduling associated with the PRS measurement;
skipping responding to other response location information than response location information of a first type;
sending an SRS on the dormant BWP;
measuring a PRS on the dormant BWP; and
reporting response location information on a CG associated with the dormant BWP.

67. The apparatus according to claim 66, wherein the response location information of the first type comprises at least one of following:

response location information transmitted on a physical uplink control channel PUCCH;
response location information of a first priority;
response location information whose delay requirement is less than a first threshold;
on-demand response location information;
aperiodic response location information; and
event-triggered response location information.

68. The apparatus according to claim 47, wherein the positioning apparatus further comprises a sending module, wherein before switching to the first resource to perform the positioning service based on the positioning service indication signaling, the sending module is configured to send fourth information to a network side device, wherein the fourth information is configuration information of a PRS or measurement window information of the PRS.

69. The apparatus according to claim 47, wherein the positioning apparatus further comprises a sending module, wherein before switching to the first resource to perform the positioning service based on the positioning service indication signaling, the sending module is configured to send fifth information to a network side device, wherein the fifth information is first resource indication information or first resource switching request information.

70. The apparatus according to claim 47, wherein
the processing module is specifically configured to switch to the target MG to perform the positioning service in a case that a BWP indicated by the positioning service indication signaling is a non-dormant BWP.

71. The apparatus according to claim 47, wherein the positioning apparatus further comprises an obtaining module, wherein

before switching to the first resource to perform the positioning service based on the positioning service indication signaling, the obtaining module is configured to obtain one or more pieces of BWP configuration information, wherein
the one or more pieces of BWP configuration information comprise at least one of following:

BWP configuration information configured by a network side device;
BWP configuration information indicated by the network side device; and
pre-defined BWP configuration information.

72. A positioning apparatus, wherein the positioning apparatus comprises a receiving unit and a sending unit, wherein

the receiving unit is configured to receive first target information, wherein the first target information comprises at least one of configuration information of a positioning reference signal PRS, measurement window information of the PRS, first resource indication information, and first resource switching request information; and
the sending unit is configured to send positioning service indication signaling to a terminal based on the first target information, wherein the positioning service indication signaling comprises at least one of first configuration information and first dynamic indication information, wherein
the first dynamic indication information indicates the terminal to switch to a first resource to perform a positioning service, the positioning service comprises PRS measurement or sounding reference signal SRS sending, and the first configuration information comprises at least one of following:

a dormant bandwidth part BWP;
configuration information of the dormant BWP;
a configuration relationship between a target measurement gap MG and the positioning service; and
an association relationship between the target MG and activation signaling of the positioning service.

73. The apparatus according to claim 72, wherein the first configuration information comprises at least one of following:

first indication information, wherein the first indication information indicates whether a serving cell corresponding to the terminal supports the positioning service;
second indication information, wherein the second indication information indicates whether a dormant BWP corresponding to the terminal supports the positioning service;
first type information, wherein the first type information indicates a type of the dormant BWP corresponding to the terminal, and the type of the dormant BWP is associated with whether the dormant BWP corresponding to the terminal supports the positioning service;

first enabling information, wherein the first enabling information indicates whether the positioning service is enabled in the dormant BWP corresponding to the terminal or the serving cell corresponding to the terminal; and second enabling information, wherein the second enabling information indicates whether the dormant BWP corresponding to the terminal or the serving cell corresponding to the terminal supports a positioning service beyond a band range of a BWP.

74. The apparatus according to claim 72, wherein the first dynamic indication information comprises a BWP switching command and first information, or the first dynamic indication information comprises an MG activation command and the first information.

75. The apparatus according to claim 72, wherein the first dynamic indication information further comprises second information, and the second information is configured for assisting the terminal in performing BWP switching, wherein the second information comprises at least one of following:

first cell identification information, wherein the first cell identification information indicates a cell configured for the positioning service;
second cell identification information, wherein the second cell identification information indicates an activation state of a cell that comprises the dormant BWP, or an activation state of a cell group that comprises the dormant BWP; and
BWP identification information, wherein the BWP identification information indicates a to-be-activated BWP.

76. The apparatus according to claim 72, wherein the first dynamic indication information further comprises third information, and the third information is configured for assisting the terminal in switching to the first resource to perform the positioning service, wherein
the third information comprises at least one of following:

first positioning service indication information, wherein the first positioning service indication information indicates to activate the positioning service;
second positioning service indication information, wherein the second positioning service indication information indicates to activate a target BWP of a first cell to perform the positioning service;
third positioning service indication information, wherein the third positioning service indication information indicates to activate a dormant BWP of a second cell to perform the positioning service; and
fourth positioning service indication information, wherein the fourth positioning service indication information indicates to activate the target MG to perform the positioning service.

77. The apparatus according to claim 74, wherein the first information comprises at least one of location request information and an uplink resource scheduling command.

78. The apparatus according to claim 77, wherein the location request information comprises at least one of following:

a type of a location request;
whether a location of the terminal is requested;
a report periodicity of response location information;
a report gap of the response location information;
a report quantity of the response location information;
response time of the location request;
measurement time corresponding to the positioning service or scheduled time T corresponding to the positioning service;
response location information that indicates a location method specified for reporting;
a report type of a PRS measurement result; and
a pre-configured identifier of the location request.

79. The apparatus according to claim 77, wherein the uplink resource scheduling command comprises at least one of following:

uplink resource scheduling information;
location report-dedicated scheduling information;

a pre-configured identifier of a location request;
a type of the location request;
whether a location of the terminal is requested;
a report periodicity of response location information;
a report gap of the response location information;
a report quantity of the response location information;
response time of the location request;
measurement time corresponding to the positioning service or scheduled time T corresponding to the positioning service;
response location information that indicates a location method specified for reporting; and
a configuration of a configured grant CG or an identifier of the CG, wherein there is an association relationship between the CG and the PRS measurement or between the CG and a PRS measurement window.

80. The apparatus according to claim 77, wherein the first information comprises the uplink resource scheduling command, and response location information sent by the terminal to a network side device comprises at least one of following:

a pre-configured report identifier;
positioning information;
a reason for failure to report the response location information;
a location method corresponding to a report;
whether there is unreported response location information; and
acknowledgement location request information.

81. The apparatus according to claim 80, wherein the positioning information comprises at least one of following:

information about an event of sending the response location information;
a measurement result and/or a location estimation;
a current measurement result and/or a current location estimation;
a finally obtained measurement result and/or a finally obtained location estimation;
a differential measurement result and/or a differential location estimation; and
a measurement result in a PRS measurement window and/or a location estimation in the PRS measurement window.

82. The apparatus according to claim 74, wherein the BWP switching command indicates any one of following:

activating a serving cell to which a target BWP belongs;
activating the target BWP; and
activating the target BWP, wherein the target BWP is the dormant BWP, a BWP currently activated by the terminal, or a BWP activated for the first time by a serving cell.

83. The apparatus according to claim 82, wherein an activation state of the serving cell to which the target BWP belongs is configured as on when the serving cell is configured for the terminal, or is configured as on when the serving cell is added to the terminal; or
the activation state of the serving cell to which the target BWP belongs is configured as on before the terminal performs the positioning service.

84. The apparatus according to claim 72, wherein a radio network temporary identifier RNTI of the first dynamic indication information is associated with the positioning service, or the RNTI of the first dynamic indication information is associated with a power saving RNTI PS-RNTI.

85. The apparatus according to claim 72, wherein there is a first association relationship between the target MG and activation signaling of a PRS, and the first association relationship comprises at least one of following:

an activation state of the PRS is on, and an activation state of the target MG is on; the activation state of the PRS is off, and the activation state of the target MG is off;
the activation state of the PRS is on, and the target MG is a first MG; and the activation state of the PRS is off, and the target MG is a second MG.

86. The apparatus according to claim 85, wherein the first MG comprises an MG for the PRS measurement and an MG for radio resource management RRM measurement, or the first MG comprises the MG for the PRS measurement; and the second MG comprises the MG for the RRM measurement.

87. The apparatus according to claim 85 or 86, wherein a length of the first MG is greater than or equal to a length of the second MG.

88. The apparatus according to claim 72, wherein there is a second association relationship between the first dynamic indication information and the PRS measurement or a PRS measurement window, and the second association relationship comprises at least one of following:

> that a time domain location at which the first dynamic indication information is received is earlier than a time domain start point of the PRS measurement;
> that the time domain location at which the first dynamic indication information is received is earlier than a time domain location obtained by subtracting first duration from the time domain start point of the PRS measurement;
> that the time domain location at which the first dynamic indication information is received is earlier than a time domain start point of the PRS measurement window;
> that the time domain location at which the first dynamic indication information is received is earlier than a time domain location obtained by subtracting the first duration from the time domain start point of the PRS measurement window;
> that a frequency domain range of a PRS is within a band range of a target BWP;
> that a frequency domain range of an SRS is within the band range of the target BWP; and
> in a case that the first resource is the dormant BWP, PRS measurement or SRS sending beyond a band range of the dormant BWP is allowed.

89. The apparatus according to claim 72, wherein there is a third association relationship between the first dynamic indication information and scheduled time T, and the third association relationship comprises at least one of following:

> that a time domain location at which the first dynamic indication information is received is earlier than the scheduled time T; and
> that the time domain location at which the first dynamic indication information is received is earlier than a time domain location obtained by subtracting first duration from the scheduled time T.

90. The apparatus according to claim 72, wherein there is a fourth association relationship between the first configuration information and scheduled location time T, and the fourth association relationship comprises at least one of following:

> that a time domain location at which the first configuration information is received is earlier than the scheduled time T; and
> that the time domain location at which the first configuration information is received is earlier than a time domain location obtained by subtracting second duration from the scheduled time T.

91. The apparatus according to claim 72, wherein the dormant BWP has at least one of following features:

> stopping a BWP-inactive timer;
> starting a PRS measurement timer;
> starting a CG associated with the PRS measurement;
> starting resource scheduling associated with the PRS measurement;
> skipping responding to other response location information than response location information of a first type;
> sending an SRS on the dormant BWP;
> measuring a PRS on the dormant BWP; and
> reporting response location information on a CG associated with the dormant BWP.

92. The apparatus according to claim 91, wherein the response location information of the first type comprises at least one of following:

> response location information transmitted on a physical uplink control channel PUCCH;
> response location information of a first priority;
> response location information whose delay requirement is less than a first threshold;

on-demand response location information;
aperiodic response location information; and
event-triggered response location information.

93. A terminal, comprising a processor, a memory, and a program or an instruction stored in the memory and executable on the processor, wherein when the program or the instruction is executed by the processor, steps of the positioning method according to any one of claims 1 to 25 are implemented.

94. A network side device, comprising a processor, a memory, and a program or an instruction stored in the memory and executable on the processor, wherein when the program or the instruction is executed by the processor, steps of the positioning method according to any one of claims 26 to 46 are implemented.

95. A readable storage medium, storing a program or an instruction, wherein when the program or the instruction is executed by a processor, steps of the positioning method according to any one of claims 1 to 25 are implemented, or steps of the positioning method according to any one of claims 26 to 46 are implemented.

96. A computer program product, when executed by at least one processor, implementing the positioning method according to any one of claims 1 to 46.

FIG. 1

FIG. 2

A terminal switches, based on positioning service indication signaling, to a first resource to perform a positioning service

201

FIG. 3

Time

| | UE | NG-RAN | 5GCN(s) | LCS Client / AF |

T-t1 —

Location request (T) — Location request (T)

Determine a positioning method and schedule location measurement at time T

Positioning preparation phase

T —

Allow the location measurement

Determine a location

Positioning preparation phase

T+t2 —

Location response — Location response

FIG. 4

A network side device receives first target information  ⌇301

The network side device sends positioning service indication signaling to a terminal based on the first target information  ⌇302

FIG. 5

500

Positioning apparatus

Processing module  501

FIG. 6

600

Positioning apparatus

Receiving unit 601

Sending unit 602

FIG. 7

700

Communication device

701 Processor ⟺ Memory 702

FIG. 8

100

FIG. 9

FIG. 10

## INTERNATIONAL SEARCH REPORT

| International application No. |
|---|
| **PCT/CN2022/083902** |

**A. CLASSIFICATION OF SUBJECT MATTER**

H04W 36/00(2009.01)i;  H04W 4/02(2018.01)i

According to International Patent Classification (IPC) or to both national classification and IPC

**B. FIELDS SEARCHED**

Minimum documentation searched (classification system followed by classification symbols)

H04W; H04B; H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 终端, 手机, 移动台, 定位, 位置, 指示, 信令, 命令, 消息, 信息, 休眠, 测量间隙, 延迟, 迟延, 延时, 时延, UE, position+, locat+, dorman+, BWP, PRS, SRS, CSI-RS, SSB, TRS, MG, delay

**C. DOCUMENTS CONSIDERED TO BE RELEVANT**

| Category* | Citation of document, with indication, where appropriate, of the relevant passages | Relevant to claim No. |
|---|---|---|
| X | WO 2020168573 A1 (NOKIA SHANGHAI BELL CO., LTD. et al.) 27 August 2020 (2020-08-27) claims 1-78, and description, paragraphs [0027]-[00236] | 1-96 |
| X | US 2020358576 A1 (HUAWEI TECHNOLOGIES CO., LTD.) 12 November 2020 (2020-11-12) claims 1-20, and description, paragraphs [0096]-[0320] | 1-96 |
| X | CN 110536229 A (ZTE CORP.) 03 December 2019 (2019-12-03) claims 1-25, and description, paragraphs [0055]-[0151] | 1-96 |
| X | LG ELECTRONICS. "Discussion on latency and efficiency enhancement for NR positioning" *3GPP TSG RAN WG1 #104-e R1-2100711*, 05 February 2021 (2021-02-05), sections 2-3 | 1-96 |

☐ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 June 2022** | **28 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/083902**

| Patent document cited in search report | | | Publication date (day/month/year) | Patent family member(s) | | | Publication date (day/month/year) |
|---|---|---|---|---|---|---|---|
| WO | 2020168573 | A1 | 27 August 2020 | US | 2022116902 | A1 | 14 April 2022 |
| | | | | EP | 3928533 | A1 | 29 December 2021 |
| | | | | CN | 113475101 | A | 01 October 2021 |
| US | 2020358576 | A1 | 12 November 2020 | WO | 2020228646 | A1 | 19 November 2020 |
| | | | | EP | 3967092 | A1 | 16 March 2022 |
| CN | 110536229 | A | 03 December 2019 | WO | 2020063947 | A1 | 02 April 2020 |

Form PCT/ISA/210 (patent family annex) (January 2015)

**REFERENCES CITED IN THE DESCRIPTION**

**Patent documents cited in the description**

• CN 202110352095